# EUROPEAN PATENT SPECIFICATION

(11) **EP 4 488 793 B1**
(45) Date of publication and mention of the grant of the patent: **29.04.2026**
(21) Application number: 23788470.5
(22) Date of filing: 07.03.2023
(51) Int. Cl.: G06F 1/16, G09F 9/30, H04M 1/02

(54) **ELECTRONIC DEVICE COMPRISING FLEXIBLE DISPLAY**
ELEKTRONISCHE VORRICHTUNG MIT FLEXIBLER ANZEIGE
DISPOSITIF ÉLECTRONIQUE COMPRENANT UN ÉCRAN SOUPLE

(30) Priority: 14.04.2022 KR 20220046235; 05.07.2022 KR 20220082513; 28.02.2023 KR 20230026751
(43) Date of publication of application: 08.01.2025
(73) Proprietor: Samsung Electronics Co., Ltd., Suwon-si, Gyeonggi-do 16677 (KR)
(72) Inventor: LEE, Garam, Suwon-si Gyeonggi-do 16677 (KR); KIM, Taejeong, Suwon-si Gyeonggi-do 16677 (KR); PARK, Byounggyu, Suwon-si Gyeonggi-do 16677 (KR); KIM, Moonsoo, Suwon-si Gyeonggi-do 16677 (KR); CHOI, Hyunsuk, Suwon-si Gyeonggi-do 16677 (KR)
(74) Representative: Gulde & Partner
(86) International application number: PCT/KR2023/003094
(87) International publication number: WO 2023/200116

(56) References cited:
- WO-A1-2021/206190
- CN-U- 210 640 917
- KR-A- 20210 117 862
- KR-A- 20220 030 668
- KR-A- 20220 042 422

## Description

### [TECHNICAL FIELD]

Various embodiments of the disclosure relate to an electronic device including a flexible display.

### [BACKGROUND ART]

Electronic devices are slimmed down and enhanced to increase rigidity, reinforce their design aspects, and differentiate functional elements. Electronic devices are evolving to have various shapes as well as their stereotypical rectangular shape. When an electronic device uses a flexible display, it is possible to provide ease for the user to carry the electronic device having a large screen with a transformable structure. An example of a transformable structure adopting a flexible display in an electronic device may be a structure (e.g., a rollable structure or a slidable structure) capable of changing the display area of the display through support by housings that are slidable on each other. For example, the rollable structure may be configured to allow the flexible display to be rolled or unrolled, and the slidable structure may be configured to allow the flexible display to be partially hidden in or exposed to the outside of the housing. An electronic device with a flexible display supported by a multi-bar structure is disclosed in WO 2021 / 206190 A1.

### [DETAILED DESCRIPTION OF THE INVENTION]

### [TECHNICAL PROBLEM]

The slidable electronic device may have a structure in which the housing moves in a sliding manner to extend or reduce the screen size by the flexible display. In the slidable electronic device, multiple bars(multi-bar) may be attached to the rear surface of the flexible display so that the flexible display is movable along the rail frame. The multi-bar attached to the rear surface of the flexible display may be fastened to the rail frame. In the multi-bar structure, the multi-bar may be mounted to be movable on the rail frame, but some bars may be bent or separated from the rail frame by a repulsive force generated in some sections.

### [TECHNICAL SOLUTION]

According to the invention, an electronic device according to claim 1 is provided. Exemplary embodiments are defined in claims 2 to 15.

### [ADVANTAGEOUS EFFECTS]

According to various embodiments of the invention proposed in the disclosure, it is possible to prevent some bars from escaping off the rail frame as the stop portion provided on each of two opposite ends of the bars having a multi-bar structure are stuck or engaged to the guide rail of the rail frame when extending or reducing the flexible display in the electronic device.

Effects achievable in example embodiments of the disclosure are not limited to the above-mentioned effects, but other effects not mentioned may be apparently derived and understood by one of ordinary skill in the art to which example embodiments of the disclosure pertain, from the following description. In other words, unintended effects in practicing embodiments of the disclosure may also be derived by one of ordinary skill in the art from example embodiments of the disclosure.

### [BRIEF DESCRIPTION OF DRAWINGS]

FIG. 1 is a block diagram illustrating an electronic device in a network environment according to an embodiment of the disclosure;
FIGS. 2A and 2B are front and rear views illustrating an electronic device in a closed state according to an embodiment of the disclosure;
FIGS. 3A and 3B are front and rear views illustrating an electronic device in an open state according to an embodiment of the disclosure;
FIG. 4 is an exploded perspective view illustrating an electronic device according to an embodiment of the disclosure;
FIG. 5A is a cross-sectional view of the electronic device, taken along line 5a-5a of FIG. 2A according to an embodiment of the disclosure;
FIG. 5B is a cross-sectional view of the electronic device, taken along line 5b-5b of FIG. 3A according to an embodiment of the disclosure;
FIG. 6 is a perspective view illustrating a state in which a multi-bar structure and a rail frame are coupled according to an embodiment of the disclosure;
FIG. 7 is an exploded perspective view of FIG. 6;
FIG. 8 is an enlarged view of one end portion (portion M1 of FIG. 7) of a multi-bar structure according to an embodiment of the disclosure;
FIG. 9 is an enlarged view of a portion (portion M2 of FIG. 7) of a rail frame according to an embodiment of the disclosure;
FIG. 10 is a view illustrating a process in which the multi-bar structure of FIGS. 8 and 9 are mounted on the rail frame according to an embodiment of the disclosure;
FIG. 11 is a cross-sectional view illustrating a state in which the multi-bar structure is mounted on the rail frame as illustrated in FIG. 10;
FIG. 12 is an enlarged cross-sectional view illustrating a portion (portion M3 of FIG. 11) where a multi-bar structure is mounted on a rail frame according to an embodiment of the disclosure;
FIG. 13 is a view illustrating a chamfered edge portion of a guide rail in the structure of FIG. 12;
FIG. 14 is a view illustrating a rounded edge portion of a guide rail in the structure of FIG. 12;
FIGS. 15A, 15B, 16A, and 16B are views illustrating various embodiments in which a groove is formed in a portion of a multi-bar structure or a portion of a rail frame in the structure of FIG. 12;
FIG. 17 is an enlarged cross-sectional view illustrating a portion where a multi-bar structure is mounted on a rail frame according to another embodiment of the disclosure;
FIG. 18 is an enlarged cross-sectional view illustrating a portion where a multi-bar structure is mounted on a rail frame according to another embodiment of the disclosure;
FIG. 19 is an enlarged cross-sectional view illustrating a portion where a multi-bar structure is mounted on a rail frame according to another embodiment of the disclosure;
FIG. 20 is an enlarged cross-sectional view illustrating a portion where a multi-bar structure is mounted on a rail frame according to another embodiment of the disclosure;
FIG. 21 is an enlarged cross-sectional view illustrating a portion where a multi-bar structure is mounted on a rail frame according to another embodiment of the disclosure; FIG. 22 is a perspective view illustrating one bar of a multi-bar structure according to an embodiment of the disclosure;
FIGS. 23 and 24 are cross-sectional views illustrating a bar, taken along portion M4 of FIG. 22 according to various embodiments;
FIG. 25 is a perspective view illustrating a rail frame according to an embodiment of the disclosure;
FIG. 26 is a cross-sectional view taken along portion M5 of FIG. 25;
FIG. 27 is a view illustrating a rail frame and a multi-bar structure according to an embodiment of the disclosure;
FIG. 28 is a view schematically illustrating a rail frame and a multi-bar structure according to another embodiment of the disclosure;
FIG. 29 is a view schematically illustrating a rail frame and a multi-bar structure according to another embodiment of the disclosure;
FIG. 30 is a view schematically illustrating a rail frame and a multi-bar structure according to another embodiment of the disclosure;
FIG. 31 is a side view illustrating a state in which a flexible display, a bending plate, and a multi-bar structure among components of an electronic device are coupled according to an embodiment of the disclosure;
FIG. 32 is a perspective view illustrating a bending plate according to an embodiment of the disclosure; and
FIG. 33 is a cross-sectional view taken along portion M5 of FIG. 32.

Reference may be made to the accompanying drawings in the following description, and specific examples that may be practiced are shown as examples within the drawings. Other examples may be utilized and structural changes may be made without departing from the scope of the various examples.

### [DESCRIPTION OF DRAWINGS]

Embodiments of the present invention are described in the following with reference to the accompanying drawings in such a detailed manner as to be easily practiced by one of ordinary skill in the art. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

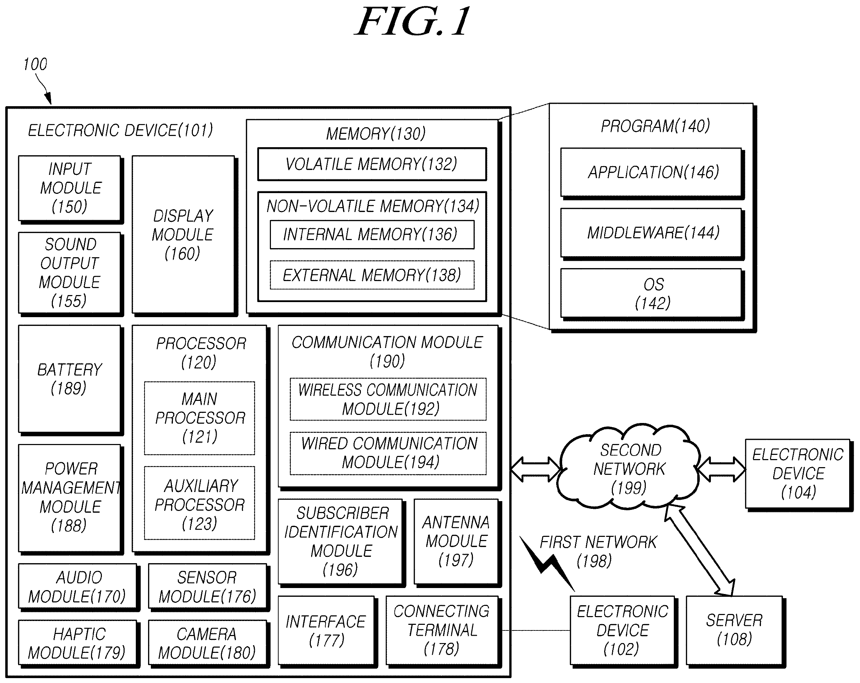

FIG. 1 is a block diagram illustrating an electronic device in a network environment according to an embodiment of the disclosure.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

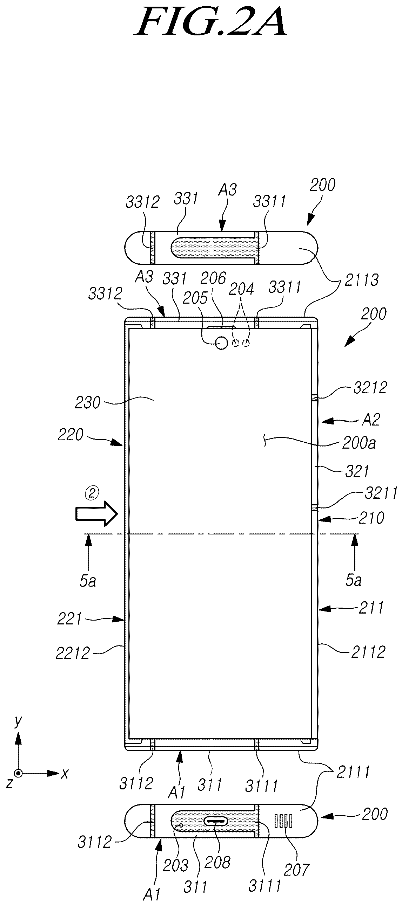

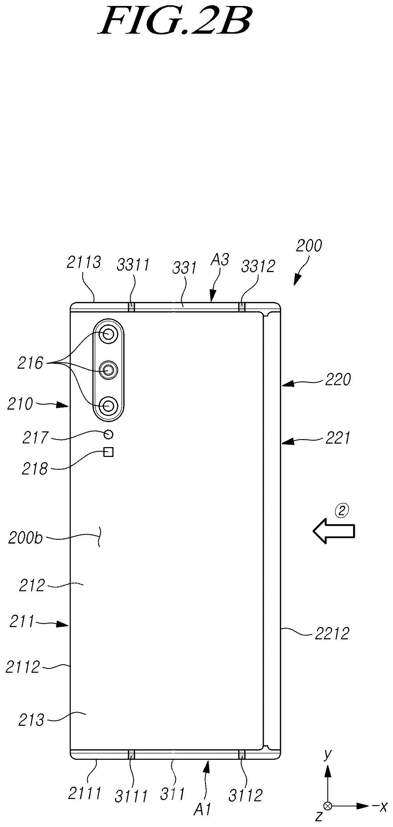

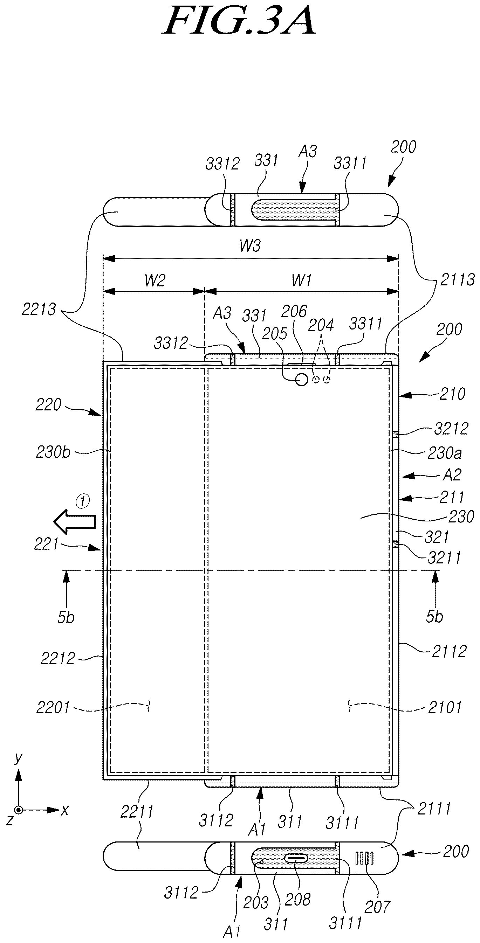

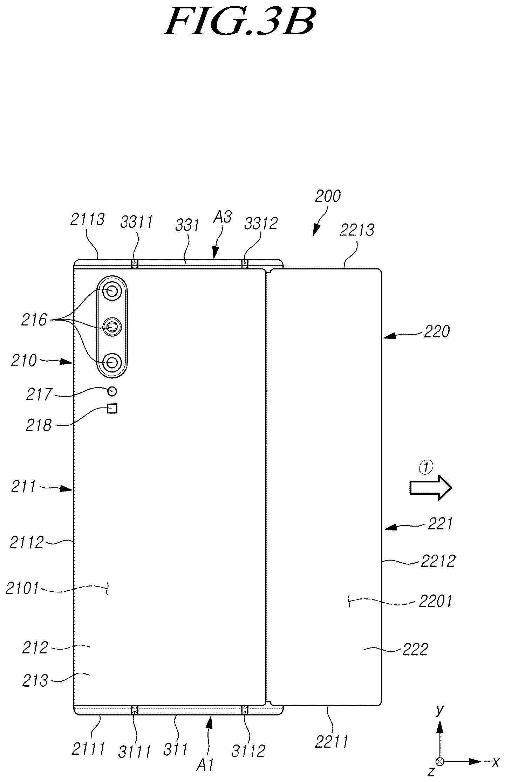

FIGS. 2A and 2B are front and rear views illustrating an electronic device in a closed state according to an embodiment of the disclosure. FIGS. 3A and 3B are front and rear views illustrating an electronic device in an open state according to an embodiment of the disclosure.

According to an embodiment, in FIGS. 2A and 2B, or FIGS. 3A and 3B, the electronic device 200 may be at least partially similar to the electronic device 101 of FIG. 1, or may further include other embodiments of the electronic device 101.

Referring to FIGS. 2A and 2B or FIGS. 3A and 3B, an electronic device 200 includes a flexible display 230 (e.g., an expandable display, a stretchable display, a rollable display, or a display assembly) (e.g., the display module 160 of FIG. 1) that may be fastened to allow sliding or rolling motions. The flexible display 230 may have a structure in which at least two housings are stacked front to rear, enabling in a designated direction (e.g., a left-right direction or an upper-lower direction). For example, the flexible display 230 may be driven so that the display area varies as one housing slides along another housing in a designated direction (e.g., the left-right direction or the upper-lower direction). According to an embodiment, the electronic device 200 may include a first housing 210 (e.g., a first housing structure or a base housing), a second housing 220 (e.g., a second housing structure or a slide housing), or a flexible display 230. For example, the second housing 220 may be coupled to the first housing 210 to be movable in a designated distance and direction (e.g., the x-axis direction (the right direction)) and within a designated distance from the first housing 210. The flexible display 230 may be disposed on the front surface of the electronic device 200 to be supported through at least a portion of the first housing 210 and the second housing 220.

According to an embodiment, the electronic device 200 may switch from the open state to the closed state as at least a portion of the second housing 220 is received in a first receiving portion 2101 of the first housing 210. The first receiving portion 2101 may refer to a space formed inside the first housing 210. The electronic device 200 may switch from the closed state to the open state as at least the portion of the second housing 220, received in the first receiving portion 2101, is slid out of the first receiving portion 2101. In the disclosure, the open state may refer to, e.g., a state in which the second area 230b of the flexible display 230 is maximized, and the closed state may refer to, e.g., a state in which the second area 230b of the flexible display 230 is minimized.

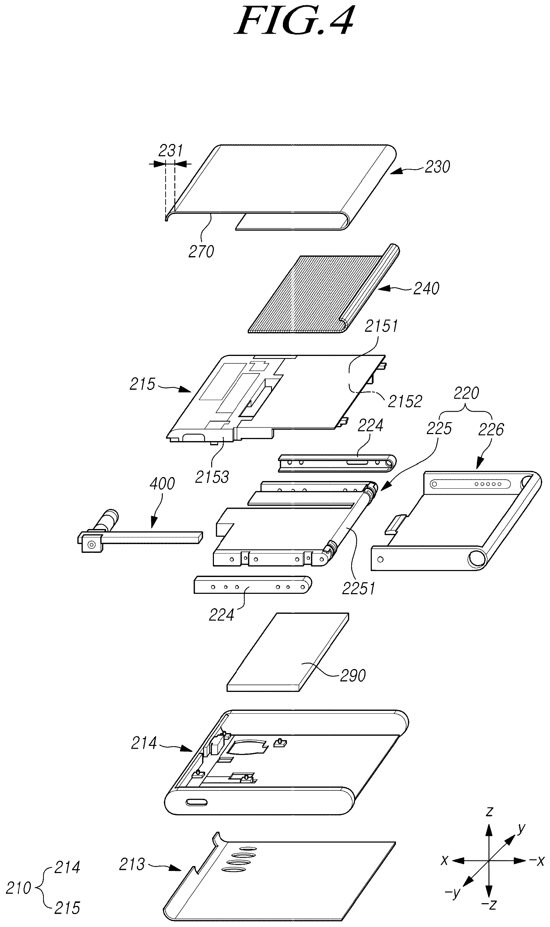

The electronic device 200 includes a multi-bar structure (bendable member or bendable support member) (e.g., the multi-bar structure 240 of FIG. 4) (e.g., an articulated hinge module or a bendable member). In the open state, the multi-bar structure 240 may be at least partially flush with at least a portion of the first housing 210. In the closed state, the multi-bar structure 240 may be at least partially received in the second receiving portion 2201 of the second housing 220 but, without limitations thereto, may also be received in the first receiving portion 2101 of the first housing 210. Here, the second receiving portion 2201 may refer to a space formed inside the second housing 220.

The multi-bar structure 240, with the attached second area 230b of the flexible display 230, may be disposed adj acent to the second side member 221 of the second housing 220 as illustrated, but this is exemplary. The multi-bar structure 240 or the second area 230b of the flexible display 230 may also be disposed adjacent to the first side member 211 of the first housing 210.

According to an embodiment, as the second housing 220 slides along a designated direction (e.g., the x-axis direction (direction ①) or the -x-axis direction (direction ②)) from the first housing 210, the electronic device 200 may lead to a change in the display area of the flexible display 230.

According to an embodiment, the display area of the flexible display 230 may vary depending on the slide-in operation (e.g., the movement in the x-axis direction (direction ②)) or the slide-out operation (e.g., the movement in the -x-axis direction (direction ①)). The flexible display 230 may be drawn in or out by, e.g., an external force (e.g., the user's manipulation) or an internal force (e.g., the operation of the driving module 400). The slide-in operation may be a sequence of movements that reduce the display area of the flexible display 230. The slide-out operation may be a sequence of movements that increase the display area of the flexible display 230. Hereinafter, for convenience of description, a state in which the display area of the flexible display 230 is maximized by the slide-out operation is referred to as an open state, and a state in which the display area of the flexible display 230 is minimized by the slide-in operation is referred to as a closed state. For convenience of description, in the following description, the state of the flexible display 230 before the slide-in or slide-out operation commences is denoted as a first state or an initial state, and the state of the flexible display 230 after the slide-in or slide-out operation has been done is denoted as a second state or a switching state.

According to an embodiment, the flexible display 230 may be disposed not to be received in the first receiving portion 2101 of the first housing 210 or the second receiving portion 2201 of the second housing 220 while a first area 230a corresponding to at least a portion is supported by the multi-bar structure (e.g., the multi-bar structure 240 of FIG. 4). Here, the first area 230a may refer to a flat area consistently visible from the outside regardless of whether the flexible display 230 is slid in or out. The first area 230a may be used, e.g., for the electronic device 200 to display an image according to an operation on the front surface. The first area 230a of the flexible display 230 may be disposed to be visible from the outside (e.g., the front surface). The first area 230a may include an edge portion (e.g., the edge portion 231) of the display. The edge portion (e.g., the edge portion 231) of the flexible display 230 may maintain a predetermined area regardless of draw-in or draw-out.

According to an embodiment, the flexible display 230 may be received in the first receiving portion 2101 of the first housing 210 or the second receiving portion 2201 of the second housing 220 while a second area 230b corresponding to at least a portion is supported by the multi-bar structure (e.g., the multi-bar structure 240 of FIG. 4). Here, the second area 230b may be an area in which an area visible from the outside varies according to the slide-in or slide-out of the flexible display 230. The second area 230b may be deactivated so as to not be used to display the image according to the operation of the electronic device 200 or be activated to be used to display the image according to the operation, on the rear surface, of the electronic device 200. The second area 230b of the flexible display 230 received in the receiving portion (e.g., the first receiving portion 2101 or the second receiving portion 2201) may be disposed to be visible from the outside or to be visible from the rear surface alone, but not from the front surface. The second area 230b may be enlarged by the slide-out operation or shrunken by the slide-in operation. The second area 230b may be activated to be used to display the image according to the operation of the electronic device 200 only on the portion visible from the outside as at least a portion is slid out.

According to an embodiment, the electronic device 200 may include a front surface 200a (e.g., a first surface), a rear surface 200b (e.g., a second surface) facing away from the front surface 200a, and a side surface (not shown) surrounding a space between the front surface 200a and the rear surface 200b. The side surface may be at least one of an upper surface, a lower surface, a left surface, or a right surface with respect to the front surface 200a. However, this is an example, and the first side member 211 and the second side member 221 may have surfaces corresponding to one or two of the four surfaces of the first housing 210 and the second housing 220. Hereinafter, for convenience of description, a case of having three surfaces is described as an example.

According to an embodiment, the electronic device 200 may include a first housing 210 and a second housing 220. The first housing 210 may include a first side member 211. The second housing 220 may include a second side member 221. The first side member 211 may form an edge corresponding to at least three surfaces (e.g., the upper, lower, and right surfaces of the front surface) among the four surfaces of the first housing 210. The second side member 221 may form an edge corresponding to at least three surfaces (e.g., the upper, lower, and left surfaces of the front surface) among the four surfaces of the second housing 220.

According to an embodiment, the first side member 211 may include at least one of a first side surface 2111 (e.g., a lower surface of the first housing 210), a second side surface 2112 (e.g., a right surface of the first housing 210), or a third side surface 2113 (e.g., an upper surface of the first housing 210) with respect to the front surface. The first side surface 2111 may have a first length along a first direction (e.g., x axis direction). The second side surface 2112 may extend to have a second length longer than the first length along a direction (e.g., y axis direction) substantially perpendicular to the first side surface 2111. The third side surface 2113 may extend substantially parallel to the first side surface 2111 from the second side surface 2112 and may have the first length. The first side member 211 may be, e.g., at least partially formed of a conductive material (e.g., metal). The first side member 211 may include, e.g., a first supporting member 212 extending to at least a portion of the first receiving unit 2101 of the first housing 210.

According to an embodiment, the second side member 221 may include at least one of a fourth side surface 2211 (e.g., a lower surface of the second housing 220), a fifth side surface 2212 (e.g., a left surface of the second housing 220), or a sixth side surface 2213 (e.g., an upper surface of the second housing 220) with respect to the front surface. The fourth side surface 2211 at least partially corresponds to the first side surface 2111 and may have a third length. The fifth side surface 2212 may extend substantially parallel to the second side surface 2112 from the fourth side surface 2211 and may have a fourth length greater than the third length. The sixth side surface 2213 may extend substantially parallel to the third side surface 2113 from the fifth side surface 2212 and may have the third length. The second side member 221 may be, e.g., at least partially formed of a conductive material (e.g., metal). The second side member 221 may include, e.g., a second supporting member 222 extending to at least a portion of the second receiving unit 2201 of the second housing 220.

According to an embodiment, the first side surface 2111 and the fourth side surface 2211 or the third side surface 2113 and the sixth side surface 2213 may be coupled to be slidable on each other. **In** this case, the whole or part of the fourth side surface 2211 overlaps the first side surface 2111 and may thus be disposed to be substantially invisible from the outside. Further, the whole or part of the sixth side surface 2213 overlaps the third side surface 2113 and may thus be disposed to be substantially invisible from the outside. For example, the fourth side surface 2211 or the sixth side surface 2213 may be disposed to be at least partially visible from the outside in the closed state.

According to an embodiment, when drawn in, the second supporting member 222 included in the second side member 221 overlaps the first supporting member 212 included in the first side member 211 and may thus be disposed to be substantially invisible from the outside. For example, in a state not fully slid in, a portion of the second supporting member 222 may overlap the first supporting member 212 to be invisible from the outside, and the rest of the second supporting member 222 may be disposed not to overlap the first supporting member 212 to be visible from the outside.

According to an embodiment, the electronic device may include a rear cover 213. The rear cover 213 may be disposed on at least a portion of the first housing 210, on the rear surface 200b of the electronic device. The rear cover 213 may be disposed through at least a portion of, e.g., the first supporting member 212. The rear cover 213 may be formed integrally with, e.g., the first side member 211. The rear cover 213 may be formed of, e.g., polymer, laminated or colored glass, ceramic, metal (e.g., aluminum, stainless steel (STS), or magnesium), or a combination of at least two thereof. The rear cover 213 may extend, e.g., to at least a portion of the first side member 211. At least a portion of the first supporting member 212 may be replaced with, e.g., the rear cover 213. The electronic device 200 may further include another rear cover (e.g., second rear cover) which is disposed on, or replaced with, at least a portion of the second supporting member 222, in the second housing 220.

According to an embodiment, the electronic device 200 may include a flexible display 230 disposed to be supported by at least a portion of the first housing 210 or the second housing 220. The flexible display 230 may include a first area 230a (e.g., flat portion) and/or a second area 230b (e.g., a bent portion, a bendable portion, or a rolling portion). The first area 230a may be an area that is always visible from the outside of the entire area of the flexible display 230. During draw-in, the second area 230b which may extend from the first area 230a may be received into the first receiving portion 2101 of the first housing 210 or the second receiving portion 2201 of the second housing 220 to be invisible from the outside and, during draw-out, drawn out of the first receiving portion 2101 or second receiving portion 2201 to be visible from the outside. The first area 230a may be disposed to be supported by the first housing 210. The second area 230b may be disposed to be at least partially supported by the multi-bar structure (e.g., the multi-bar structure 240 of FIG. 4). The area slid out of the first receiving portion 2101 or second receiving portion 2201, of the first area 230a or the second area 230b, may be activated to display an image, and the area received in the first receiving portion 2101 or second receiving portion 2201, of the second area 230b may be deactivated to not display an image.

According to an embodiment, the second area 230b of the flexible display 230 may extend from the first area 230a while being supported by the multi-bar structure (e.g., the multi-bar structure 240 of FIG. 4) in a state in which the second housing 220 has been drawn out along a designated direction (① direction). To this end, the second area 230b may form substantially the same plane as the first area 230a and may be disposed to be visible from the outside.

According to an embodiment, the second area 230b of the flexible display 230 may be received in the second receiving portion 2201 of the second housing 220 to be invisible from the outside or to be invisible from the front while being visible from the back, in a state drawn in along a designated direction (② direction).

According to an embodiment, an opposite end of the variable portion (e.g., second area 230b) of the flexible display 230 may include a fixed portion (e.g., edge portion 231) fixed by the first housing 210. The fixed portion (e.g., edge portion 231) may be formed by being bent from one side of the flexible display 230 to the side surface (e.g., the second side surface 2112) of the first housing 210. The first portion (e.g., edge portion 231) may constitute the whole or part of the side surface (e.g., the second side surface 2112) of the first housing 210.

According to an embodiment, the first housing 210 and/or the second housing 220 may be operated to slide on each other so that the entire width is variable. As an example, in the closed state, the electronic device 200 may be configured to have a first width W1 between the second side surface 2112 and the fourth side surface 2212. Further, in the open state, the electronic device 200 may be configured to have a third width W3 greater than the first width W1 as at least a portion of the multi-bar structure (e.g., the multi-bar structure 240 of FIG. 4) received in the second receiving portion 2201 of the second housing 220 is moved to have an additional second width W2. In the closed state, the flexible display 230 included in the electronic device 200 may have a display area substantially corresponding to the first width W1 and, in the open state, have an extended display area substantially corresponding to the third width W3.

According to an embodiment, the draw-in and/or draw-out of the electronic device 200 may be automatically performed. The electronic device 200 may receive, e.g., a draw-in or draw-out request and operate the driving module (e.g., the driving module 400 of FIG. 4) disposed therein. The draw-in or draw-out request may be performed through a designated operation button disposed in the electronic device 200 and/or through a touch to a corresponding object displayed on the flexible display 230. As an example, upon detecting a draw-in and/or draw-out event, the processor (e.g., the processor 120 of FIG. 1) of the electronic device 200 may operate to control the slide of the second housing 220 through the driving module 400. The processor (e.g., the processor 120 of FIG. 1) of the electronic device 200 may operate to control the display screen of the flexible display 230 to execute an application program or display an object in various manners, corresponding to the changed display area of the flexible display 230 according to, e.g., the closed state, open state, or intermediate state (including, e.g., a free stop state).

According to an embodiment, the electronic device 200 may include at least one of an input module (e.g., the microphone 203), a sound output module (e.g., the receiver 206 for phone calls or speaker 207), sensor modules 204 and 217, a camera module (e.g., the first camera module 205 or second camera module 216), a connector port 208, a key input device (not shown), or an indicator (not shown), disposed in the first receiving portion 2101 of the first housing 210. The electronic device 200 may be configured to omit at least one of the above-described components or add other components. At least one of the above-described components may be disposed in the second receiving portion 2201 of the second housing 220.

According to an embodiment, the input module may include a plurality of microphones disposed to detect the direction of sound. The sound output module may include, e.g., the receiver 206 for phone calls and the speaker 207. In the open state, the speaker 207 may be disposed to face the outside through at least one speaker hole formed in the first housing 210. The connector port 208 may be disposed to face the outside through the connector port formed in the first housing 210. The receiver 206 for phone calls may include a speaker (e.g., a piezo speaker) operated without a separate speaker hole.

According to an embodiment, the sensor modules 204 and 217 may generate an electrical signal or data value corresponding to an internal operating state or external environmental state of the electronic device 200. The sensor modules 204 and 217 may include a first sensor module 204 (e.g., proximity sensor or illuminance sensor) disposed on the front surface 200a of the electronic device 200 and/or a second sensor module 217 (e.g., hear rate monitoring (HRM) sensor) disposed on the rear surface 200b. The first sensor module 204 may be disposed under the flexible display 230, e.g., on the front surface 200a of the electronic device 200. The first sensor module 204 and/or the second sensor module 217 may include at least one of a proximity sensor, an illuminance sensor, a time of flight (TOF) sensor, an ultrasonic sensor, a fingerprint recognition sensor, a gesture sensor, a gyro sensor, an air pressure sensor, a magnetic sensor, an accelerometer, a grip sensor, a color sensor, an infrared (IR) sensor, a biometric sensor, a temperature sensor, or a humidity sensor.

According to an embodiment, the camera module may include a first camera module 205 disposed on the front surface 200a of the electronic device 200 and a second camera module 216 disposed on the rear surface 200b. The first and/or second camera module 205 and 216 may include one or more lenses, an image sensor, and/or an image signal processor. For example, the first camera module 205 may be disposed under the flexible display 230 and be configured to capture a subject through a portion of the active area of the flexible display 230. The flash 218 may be disposed on the second camera module 216. The flash 218 may include, e.g., a light emitting diode (LED) or a xenon lamp.

According to an embodiment, the first camera module 205 among the camera modules or some sensor module 204 among the sensor modules 204 and 217 may be disposed to detect the external environment through the flexible display 230. For example, the first camera module 205 or some sensor module 204 may be disposed to contact the external environment through an opening or a transmissive area formed in the flexible display 230, in the first receiving portion 2101 of the first housing 210. The area of the flexible display 230 facing the first camera module 205 may be a portion of the area displaying content and be formed as a transmissive area having a designated transmittance. The transmissive area may be formed to have a transmittance ranging from about 5% to about 20%. The transmissive area may include an area overlapping an effective area (e.g., an angle-of-view area) of the first camera module 205 through which light incident on the image sensor to obtain an image passes. For example, the transmissive area of the flexible display 230 may include an area having a lower pixel density and/or wiring density than the surrounding area. The transmissive area may replace the above-described opening. The camera module 205 may include an under display camera (UDC). The sensor module 204 may be disposed to perform its functions without being visually exposed through the flexible display 230 in the internal space of the electronic device 200.

According to an embodiment, the electronic device 200 may include at least one antenna (e.g., antenna radiator) A1, A2, and A3 electrically connected with the wireless communication circuit (e.g., the wireless communication module 192 of FIG. 1) disposed in the first receiving portion 2101 of the first housing 210. The at least one antenna A1, A2, and A3 may include at least one of a first antenna A1 disposed on the first side surface 2111 of the first housing 210, a second antenna A1 disposed on the second side surface 2112, and a third antenna A3 disposed on the third side surface 2113. The electronic device 200 may further include at least one antenna disposed on the fifth side surface 2212 of the second housing 220.

According to an embodiment, in the electronic device 200, the first antenna A1 may include a first conductive portion 311 segmented through at least one segmenter 3111 and 3112 which is a non-conductive portion, on the first side surface 2111 of the first side member 211. The first conductive portion 311 may be disposed to be segmented through a first segmenter 3111 and/or a second segmenter 3112 spaced apart from each other at a designated interval and be electrically connected with the wireless communication circuit (e.g., the wireless communication module 192 of FIG. 1).

According to an embodiment, in the electronic device 200, the second antenna A2 may include a second conductive portion 321 segmented through at least one segmenter 3211 and 3212 which is a non-conductive portion, on the second side surface 2112 of the first side member 211. The second conductive portion 321 may be disposed to be segmented through a third segmenter 3211 and/or a fourth segmenter 3212 spaced apart from each other at a designated interval and be electrically connected with the wireless communication circuit (e.g., the wireless communication module 192 of FIG. 1).

According to an embodiment, in the electronic device 200, the third antenna A3 may include a third conductive portion 331 segmented through at least one segmenter 3311 and 3312 which is a non-conductive portion, on the third side surface 2113 of the first side member 211. The third conductive portion 331 may be disposed to be segmented through a fifth segmenter 3311 and/or a sixth segmenter 3312 spaced apart from each other at a designated interval and be electrically connected with the wireless communication circuit (e.g., the wireless communication module 192 of FIG. 1).

According to an embodiment, the wireless communication circuit (e.g., the wireless communication module 192 of FIG. 1) in the electronic device 200 may be configured to transmit and/or receive a wireless signal in a designated first frequency band (e.g., about 800 MHz to 6000 MHZ) through the first conductive portion 311, the second conductive portion 321, and/or the third conductive portion 331. The wireless communication circuit (e.g., the wireless communication module 192 of FIG. 1) in the electronic device 200 may be configured to transmit and/or receive a wireless signal in a second frequency band (e.g., about 3 GHz to 100 GHz). The electronic device 200 may further include at least one antenna module for transmitting and/or receiving a signal of a first frequency band or at least one antenna module (e.g., 5G antenna module or antenna structure) for transmitting and/or receiving a signal of the second frequency band.

According to various embodiments of the disclosure, the electronic device 200 may include a driving module (e.g., the driving module 400 of FIG. 4) in an inner space for draw-in and/or draw-out. The driving module 400 may be disposed considering the relationship with other electronic components in the inner space of the electronic device 200, thereby contributing to slimming down the electronic device 200.

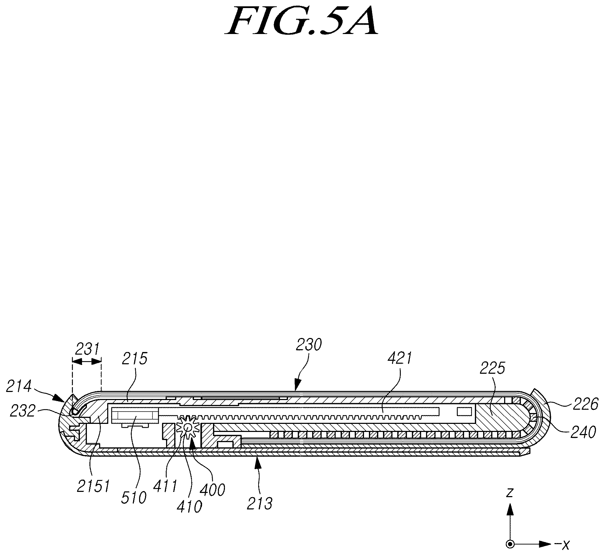

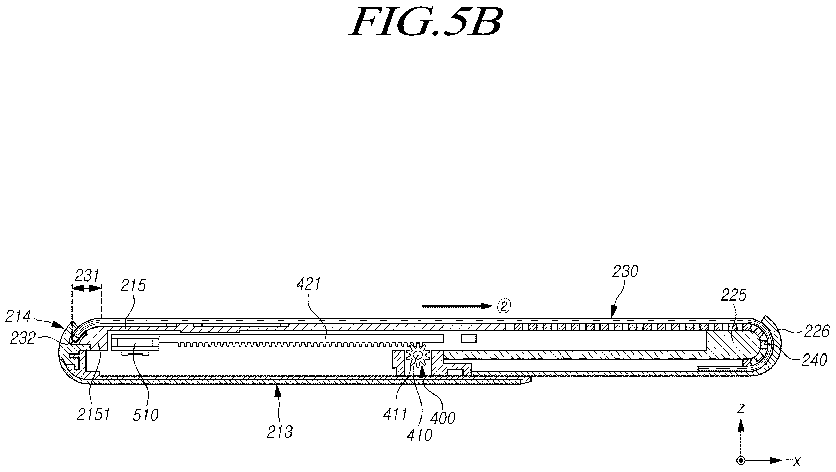

FIG. 4 is an exploded perspective view illustrating an electronic device (e.g. the electronic device 200 of FIGS. 2A to 3B) according to an embodiment of the disclosure. FIG. 5A is a cross-sectional view illustrating an electronic device (e.g., the electronic device 200 of FIGS. 2A to 3B), taken along line 5a-5a of FIG. 2A, according to an embodiment of the disclosure. FIG. 5B is a cross-sectional view illustrating an electronic device (e.g., the electronic device 200 of FIGS. 2A to 3B), taken along line 5b-5b of FIG. 3A, according to an embodiment of the disclosure.

According to an embodiment, the electronic device 200 may include a first housing 210 including a first receiving unit 2101, a second housing 220 including a second receiving unit 2201, and a multi-bar structure 240 (e.g., a multi-bar assembly), or a flexible display 230. The first housing 210 may be slidably coupled to the second housing 220. The multi-bar structure 240 may be disposed to be at least partially pivotable in the second receiving portion 2201. The flexible display 230 may be disposed to be supported by at least a portion of the multi-bar structure 240 and the first housing 210.

According to an embodiment, the first housing 210 may include at least one of a cover housing 214 or a bracket housing 215. The first housing 210 may be provided, e.g., by coupling the cover housing 214 and the bracket housing 215. At least a portion of the cover housing 214 may include, or be replaced with, a first supporting member 212. The bracket housing 215 may include a first surface 2151 facing in a second direction (e.g., z axis direction), a second surface 2152 facing in a third direction (e.g., -z axis direction) opposite to the first surface 2151, and a side surface 2153 surrounding the space between the first surface 2151 and the second surface 2152. According to an embodiment, the electronic device 200 may include an auxiliary cover that is disposed on at least a portion of the first surface 2151 of the bracket housing 215 under the flexible display 230 to provide a flat surface.

According to an embodiment, the electronic device 200 may include a substrate 510 or at least one battery 290 disposed in the first receiving portion 2101 between the cover housing 214 and the second surface 2152 of the bracket housing 215. The substrate 510 or the at least one battery 290 may be attached to the bracket housing 215.

According to an embodiment, the electronic device 200 may include at least one of a camera module (e.g., the camera module 216 of FIG. 3B) or a sensor module (e.g., the sensor module 217 of FIG. 3B) disposed in the first receiving unit 2101.

According to an embodiment, the multi-bar structure 240 may be attached to at least a portion of the rear surface of the flexible display 230. The front surface of the multi-bar structure 240 may contact the rear surface of the flexible display 230. The multi-bar structure 240 may be composed of a plurality of bars 241 supporting the flexible display 230. The plurality of bars 241 may be disposed to be spaced apart at regular intervals. In the following description, for convenience, the plurality of bars 241 may be referred to as 'multi-bar'. At least a portion of the multi-bar structure 240 may be received to be movable in the second receiving unit 2201 of the second housing 220. The multi-bar structure 240 may be at least partially received in the second receiving unit 2201 in a closed state. In the open state, the multi-bar structure 240 may be at least partially drawn out of the second receiving unit 2201 to be substantially flush with the first housing 210 (e.g., the bracket housing 215). The flexible display 230 supported by at least a portion of the first housing 210 or the multi-bar structure 240 may have a variable display area which is visible from the outside according to a slide.

According to an embodiment, the electronic device 200 may include at least one rail frame 224 disposed between the first housing 210 and the second housing 220 to induce a slide of the second housing 220. The rail frame 224 may be integrally formed with the second housing 220 (e.g., the sliding frame 225 or the slide cover housing 226). The rail frame 224 may guide the movement of the multi-bar structure 240. According to an embodiment, the electronic device 200 may further include a side cover (not shown) disposed to cover two opposite sides (e.g., the first side surface 2111 and the third side 2113 of FIG. 2A) of the first housing 210.

According to an embodiment, the second housing 220 may include a sliding frame 225 or a slide cover housing 226. The sliding frame 225 may be disposed to be at least partially movable from the first housing 210 to the second receiving unit 2201 (direction ①). For example, the sliding frame 225 may be coupled to the slide cover housing 226 and may be slidably coupled to the first housing 210 (e.g., the bracket housing 215). As another example, the sliding frame 225 may be integrally formed with the slide cover housing 226. If the slide cover housing 226 includes the structure of the sliding frame 225, the sliding frame 225 may not be included as a separate component.

According to an embodiment, the electronic device 200 may include a driving module 400. The driving module 400 may be disposed in an inner space (e.g., the first receiving unit 2101 or the second receiving unit 2201). The driving module 400 may provide a driving force for moving the second housing 220 in a direction in which the second housing 220 is drawn out from the first housing 210 (direction ①) and/or in a direction in which the second housing 220 is drawn in (direction ②).

The driving module 400 may be disposed in, e.g., the second housing 220 (e.g., the sliding frame 225).

According to an embodiment, the driving module 400 may include a driving motor 410, a first gear 411 (e.g., a pinion gear) mounted on the driving motor 410, and a second gear 421 (e.g., a rack gear) engaged with the first gear 411. The driving motor 410 may move together with the sliding frame 225 when the electronic device 200 is drawn in and/or out.

According to an embodiment, the driving module 400 may be disposed in the sliding frame 225 and be positioned on the same plane as the sliding frame 225. The driving module 400 may relatively reduce the thickness of the electronic device 200 to contribute to slimming down the electronic device 200, as compared to when it is disposed above or under the sliding frame 225.

According to an embodiment, in the electronic device 200, as the driving motor 410 is driven, the second gear 421 linearly moves, inducing draw-in or draw-out. Specifically, the second gear 421 pushes a portion of the first housing 210 or an electronic component in the first receiving unit 2101 to move the sliding frame 225 in the direction ① (e.g., -x axis direction), so that the flexible display 230 may be drawn out. Further, the second gear 421 pulls a portion of the first housing 210 or an electronic component in the first receiving unit 2101 to move the sliding frame 225 in the direction ② (e.g., +x axis direction), so that the flexible display 230 may be drawn in.

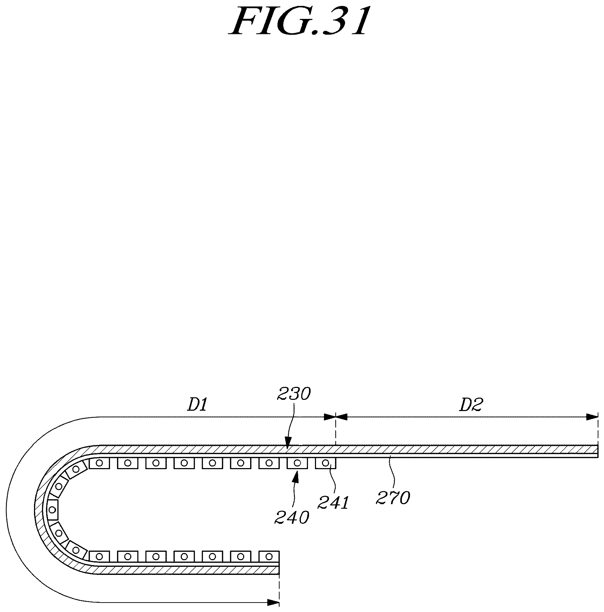

According to an embodiment, the bending plate 270 may be attached to the rear surface of the flexible display 230. The rear surface of the flexible display 230 may indicate a surface positioned opposite to a surface from which light is emitted from the display panel including a plurality of pixels. The bending plate 270 may contribute to durability of the flexible display 230. A flexible area (e.g., the flexible area D1 of FIG. 31) for providing flexibility may be provided in a portion of the bending plate 270. A plurality of through holes or slits having a predetermined pattern may be formed in the flexible area D1. The flexible area D1 may be implemented by, e.g., etching or shearing using a press mold. The bending plate 270 may reduce the influence of the load or stress on the flexible display 230 that may occur when the flexible display 230 is slid in or out. The bending plate 270 may prevent the flexible display 230 from being damaged by a force transferred when the sliding frame 225 is moved.

According to an embodiment, the bending plate 270 may be formed of various metallic materials and/or non-metallic materials (e.g., polymers). The bending plate 270 may include, e.g., stainless steel. The bending plate 270 may include, e.g., an engineering plastic. The bending plate 270 may be integrally implemented with the flexible display 230.

According to an embodiment, the bending plate 270 may allow electronic components (e.g., the multi-bar structure 240) positioned inside the electronic device 200 to be substantially invisible from the outside through the flexible display 230.

According to an embodiment, the bending plate 270 may include a supporting sheet including a touch panel or a pen recognition panel. The touch panel may detect the user's finger gesture input and may output a touch event value corresponding to the detected touch signal. The touch panel may be implemented of either a capacitive type or a resistive type. The capacitive type is a scheme for calculating the touch coordinates by detecting micro electricity generated in the user's body. The resistive type is a type in which includes two electrode plates embedded in the touch panel to calculate the touch coordinates by detecting a current flow generated as the upper and lower plates of the touched point contact. The pen recognition panel may detect the user's pen gesture input according to the operation of the user's touch pen (e.g., stylus pen or digitizer pen) of the user and output a pen proximity event value or pen touch event value. The pen recognition panel may be implemented, e.g., in an EMR type and may sense a touch or proximity input by a change in electromagnetic field due to the approach or touch of the touch pen.

According to an embodiment, the flexible display 230 may further include an extension 232 provided to extend from a fixing portion (e.g., the edge portion 231). For example, the extension 232 may be bent with the predetermined curvature to electrically connect the flexible printed circuit board (FPCB) and the display driver IC (DDI) positioned on the rear surface of the flexible display 230. The display driving chip may be provided on the extension 232, for example.

The extension 232 may be provided by, e.g., one of a chip-on-film (COF) scheme or a chip-on-plastic (COP) scheme, but is not limited thereto.

The chip-on-film scheme is a scheme in which the display driving chip is mounted on a film substrate that connects a display glass substrate and a flexible printed circuit board. When the extension 232 is provided by a chip-on-film scheme, the extension 232 may be electrically connected to the flexible printed circuit board based on anisotropic conductive film (ACF) bonding. The ACF may be an anisotropic conductive film formed by mixing fine conductive particles (e.g., nickel, carbon, or solder balls) with an adhesive resin (e.g., thermosetting resin) to allow current to flow only in one direction. If the ACF is disposed between the extension 232 and the flexible printed circuit board (not shown) positioned on the rear surface of the flexible display 230 and is then compressed by heat and pressure, the conductive pattern (not shown) formed on the extension 232 may be electrically connected to the conductive pattern formed on the flexible printed circuit board. In this case, the adhesive resin may bond the extension 232 and the flexible printed circuit board. The electrical paths included in the extension 232 may electrically connect at least one layer (e.g., TFT film) and the flexible printed circuit board. For example, the electrical paths, together with the TFT, may be formed on the TFT film based on LTPS, LTPO, or a-Si.

In FIGS. 2A to 5B described above, an embodiment in which the flexible display 230 is extended or reduced in the left-right direction is illustrated or described. However, in the case of a sliding structure in which the flexible display 230 is extended or reduced in the up-down direction, a structure in which a multi-bar structure (e.g., the multi-bar structure 240 of FIG. 4) moves along a rail frame (e.g., the rail frame 224 of FIG. 4) proposed above may be changed to a structure in which the flexible display 230 moves in the up-down direction and may be applied.

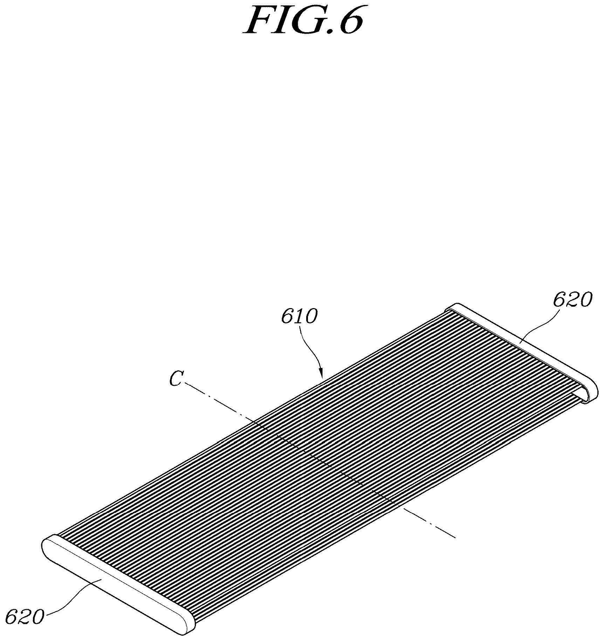

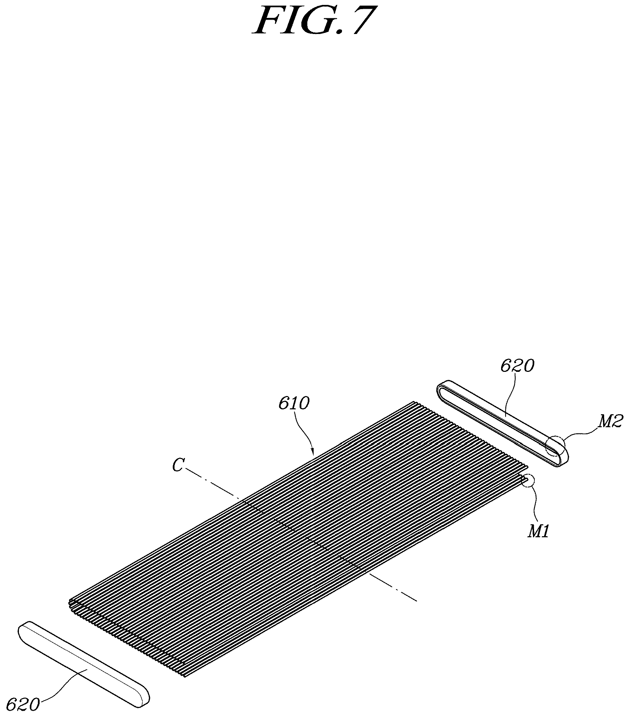

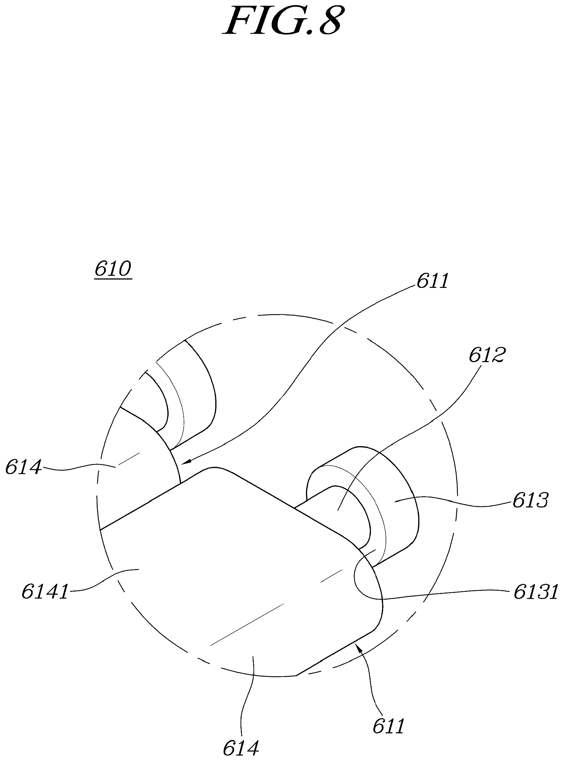

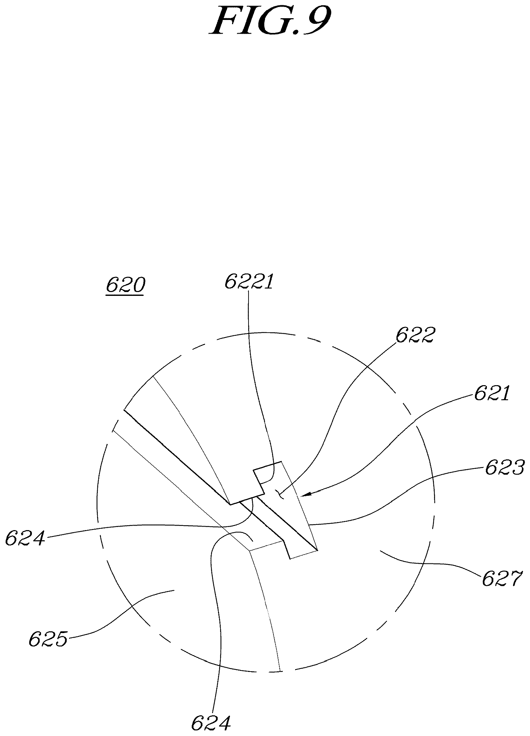

FIG. 6 is a perspective view illustrating a state in which a multi-bar structure and a rail frame are coupled according to an embodiment of the disclosure. FIG. 7 is an exploded perspective view of FIG. 6. FIG. 8 is an enlarged view of one end portion (portion M1 of FIG. 7) of a multi-bar structure according to an embodiment of the disclosure. FIG. 9 is an enlarged view of a portion (portion M2 of FIG. 7) of a rail frame according to an embodiment of the disclosure.

In FIGS. 6 to 9, components other than the multi-bar structure 610 and the rail frame 620 among the components of the electronic device (e.g., the electronic device 200 of FIG. 2A) are omitted for convenience of description. The multi-bar structure 610 illustrated in FIGS. 6 to 8 may be the same as or slightly modified from the multi-bar structure 240 illustrated in FIGS. 4, 5A, or 5B. The rail frame 620 illustrated in FIG. 6, 7, or 9 may be the same as or slightly modified from the rail frame 224 illustrated in FIG. 4. Hereinafter, a description overlapping the description of the multi-bar structure 610 or the rail frame 620 with reference to FIGS. 4 to 5B will be omitted.

According to various embodiments, a multi-bar structure 610 may include a plurality of bars 611 (e.g., the plurality of bars 241 or multi-bar of FIG. 5A). The plurality of bars 611 may be disposed at predetermined intervals to support the rear surface of the flexible display (e.g., the flexible display 230 of FIG. 2A). The plurality of bars 611 may include, e.g., bars disposed to be spaced apart from each other by a predetermined interval in a direction parallel to the length direction.

According to an embodiment, each bar 611 may include a body 614. The body 614 may be a portion supporting the flexible display 230. For example, one surface (e.g., the upper surface 6141) of the body 614 may be directly or indirectly attached to the flexible display 230.

According to an embodiment, each bar 611 includes a supporting member 612 and 613. The supporting member 612 and 613 includes a driving shaft 612 formed to extend from a lengthwise end portion of the body 614 and stop portions 613 protruding from two opposite sides and provided to be stuck or engaged by the force of detaching (or escaping) from the rail frames 620 coupled to two opposite sides.

According to an embodiment, the supporting member 612 and 613 may be formed to extend from the lengthwise end portion of the body 614. The supporting member 612 and 613 may be provided at at least one of two opposite ends of the body 614. The supporting member 612 and 613 may be provided, e.g., with a pair of driving shafts 612 protruding from two opposite ends of the body 614. The at least one protruding driving shaft 612 may be mounted to be movable on the rail frame 620.

According to an embodiment, the stop portion 613 may be provided so that the bar 611 is stuck or engaged in the rail frame 620. The stop portion 613 may be provided to be stuck or engaged in the guide rail 621 while the multi-bar structure 610 moves along the guide rail 621 in the rail frame 620. As the stop portion 613 is stuck or engaged in the guide rail 621, it is possible to prevent each bar 611 of the multi-bar structure 610 from escaping (or detaching) from the guide rail 621.

According to an embodiment, the stop portion 613 may be formed so that the diameter of the supporting member 612 and 613 increases toward the end of the supporting member 612 and 613 so that the outer circumferential surface thereof is inclined. In other words, the diameter of the stop portion 613 may be formed to be greater than the diameter of the portion of the driving shaft 612 other than the stop portion 613. Here, the end of the supporting member 612 and 613 may refer to a portion farthest from the central portion of the bar 611. The shape of the stop portion 613 is not limited to that illustrated, and the stop portion 613 may include all shapes that are configured to be stuck or engaged in the guide rail 621 of the rail frame 620 to prevent each bar 611 from escaping (or from detaching).

According to an embodiment, the stop portion 613 includes a stop surface 6131. The stop surface 6131 may be, e.g., a surface in direct contact with the stop jaw 6221 of the guide rail 621. The stop surface 6131 is positioned inward of the stop portion 613. Here, the inward direction of the stop portion 613 may refer to a direction toward the center of the body 614 of the bar 611 with respect to the stop portion 613. The stop surface 6131 may be, and extending in a direction perpendicular to the length direction of the driving shaft 612 as illustrated. The stop surface 6131 is a surface positioned inside the stop portion 613.

According to various embodiments, the rail frame 620 may include a guide rail 621. The guide rail 621 may have a structure for guiding movement so that at least a portion of the multi-bar structure 610 is slid into a housing (e.g., the first housing 210 and/or the second housing 220 of FIG. 2A) of the electronic device (e.g., the electronic device 200 of FIG. 2A) or is slid out from the housing (e.g., the first housing 210 and/or the second housing 220). For example, the guide rail 621 may be configured to allow the supporting member to be inserted thereinto so that the multi-bar structure 610 may move along the guide line.

According to an embodiment, the pair of rail frames 620 may be disposed to be symmetrical with respect to the center line C of the multi-bar structure 610. The pair of rail frames 620 may be disposed to face in directions parallel to each other. The pair of rail frames 620 disposed at two opposite ends of the multi-bar structure 610 may be disposed in a direction in which the respective inner surfaces 625 face each other. The illustrated pair of rail frames 620 may have the same configuration, but are not limited thereto. Hereinafter, components commonly included in the pair of rail frames 620 are described.

According to an embodiment, the rail frame 620 may include an inner surface 625, an outer surface 626 facing the inner surface 625, and a circumferential surface 627 surrounding a space between the inner surface 625 and the outer surface 626. The inner surface 625 may be a surface facing the multi-bar structure 610 when the multi-bar structure 610 is mounted on the rail frame 620. A portion of the inner surface 625 may contact the multi-bar structure 610. A guide rail 621 may be formed on the inner surface 625 so that the supporting member 612 and 613 of the multi-bar structure 610 may be inserted to be movable. The outer surface 626 may be a surface far from the multi-bar structure 610 when the multi-bar structure 610 is mounted on the rail frame 620. An end portion of the guide rail 621 may extend to the circumferential surface 627, and an opening 623 for inserting the multi-bar structure 610 may be provided in a portion of the circumferential surface 627.

According to an embodiment, the rail frame 620 may include a guide rail 621. The guide rail 621 may be provided to allow the supporting members 612 and 613 of the plurality of bars 611 to be inserted thereinto to guide the movement of the plurality of bars 611. The cross-sectional shape of the guide rail 621 may correspond to, e.g., the cross-sectional shape of the supporting member 612 and 613, but is not limited thereto. A portion of the guide rail 621 may be larger than a portion of the corresponding supporting member 612 and 613.

According to an embodiment, the guide rail 621 may include a stop groove 622 that receives a portion of the supporting member 612 and 613 and partially constitutes the stop jaw 6221, and a support 624 that supports the driving shaft 612 while the multi-bar structure 610 moves. The stop groove 622 may receive a portion of the supporting member 612 and 613 of the bar 611, and a portion of the stop groove 622 may constitute the stop jaw 6221. The stop groove 622 may be provided to receive the stop portion 613 of each bar 611 when the multi-bar structure 610 is mounted on the rail frame 620. The stop groove 622 may be provided so that the received stop portion 613 is spaced apart from a portion other than the portion contacted by the received stop portion 613. The size of the space of the stop groove 622 may be greater than, e.g., the size of the space formed by the support 624.

According to an embodiment, the support 624 may be provided to support a portion of the multi-bar structure 610 while the multi-bar structure 610 moves along the guide rail 621. The support 624 may be provided to support, e.g., at least a portion of the driving shaft 612 of each bar 611 of the multi-bar structure 610. The support 624 may support at least a portion of the driving shaft 612 even in a stationary state in which each bar 611 of the multi-bar structure 610 does not move. The support 624 may guide a path along which each bar 611 of the multi-bar structure 610 moves in the guide rail 621.

According to an embodiment, the support 624 may extend from the inner surface of the rail frame 620 to the inside of the rail frame 620, and the stop groove 622 may be formed further inside continuous from the extending portion of the support 624. In other words, the stop groove 622 may be positioned further inside the rail frame 620 than the support 624.

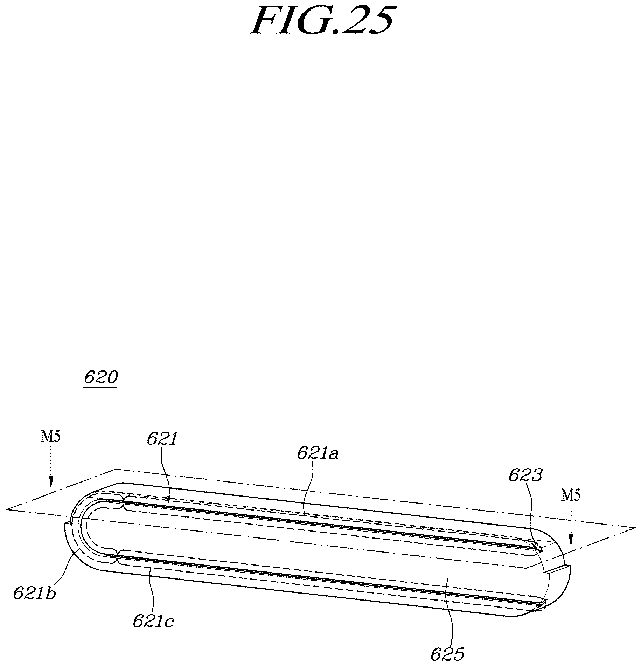

According to to present invention, the stop groove 622 includes the stop jaw 6221. The stop jaw 6221 may be provided so that the stop portion 613 is stuck or engaged. The stop jaw 6221 contacts the stop surface 6131 of the stop portion 613. Since the stop surface 6131 of the stop portion 613 is stuck or engaged by the stop jaw 6221, each bar 611 may be prevented from escaping (or detaching) from the guide rail 621 due to deformation. The stop surface 6131 of the stop portion 613 and the stop jaw 6221 of the stop groove 622 are provided to selectively contact each other. While the multi-bar structure 610 moves along the guide rail 621, the stop surface 6131 of the stop portion 613 and the stop jaw 6221 of the stop groove 622 may not contact each other at a designated portion (e.g., the first rail 621a of FIG. 25 or the third rail 621c of FIG. 25), but the disclosure is not limited thereto. While the multi-bar structure 610 moves along the guide rail 621, the stop surface 6131 of the stop portion 613 and the stop jaw 6221 of the stop groove 622 may contact each other at another designated portion (e.g., the second rail 621b of FIG. 25). Specifically, in a designated portion (e.g., the second rail 621b of FIG. 25) where the body 614 of each bar 611 is bent, the stop surface 6131 of the stop portion 613 and the stop jaw 6221 of the stop groove 622 may contact each other to prevent each bar 611 from escaping from the guide rail 621.

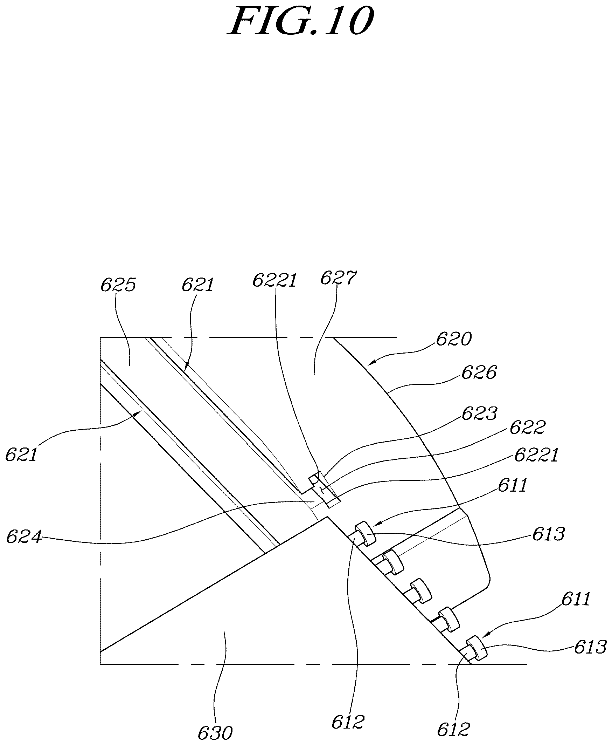

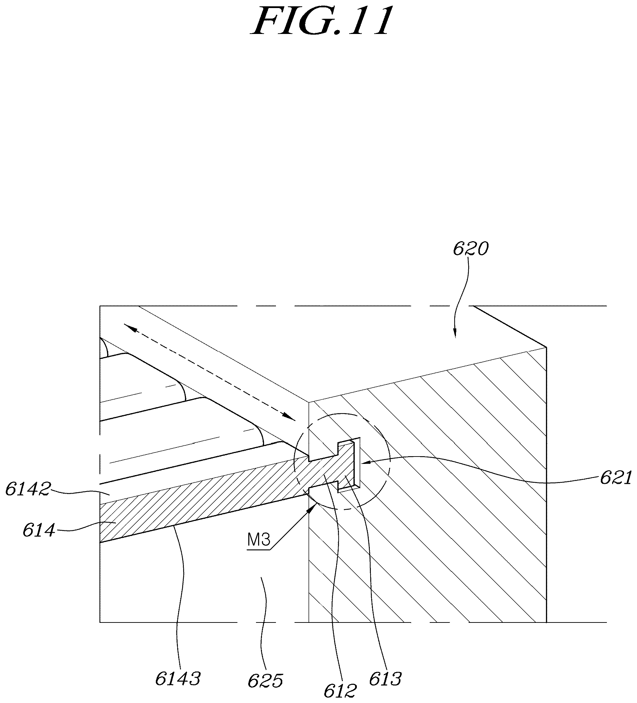

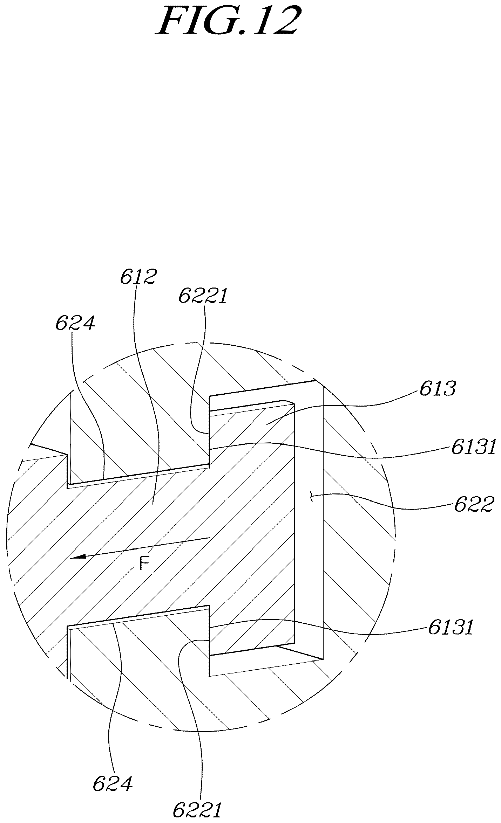

FIG. 10 is a view illustrating a process in which the multi-bar structure of FIGS. 8 and 9 are mounted on the rail frame according to an embodiment of the disclosure. FIG. 11 is a cross-sectional view illustrating a state in which the multi-bar structure is mounted on the rail frame as illustrated in FIG. 10. FIG. 12 is an enlarged cross-sectional view illustrating a portion (portion M3 of FIG. 11) where a multi-bar structure is mounted on a rail frame according to an embodiment of the disclosure.

FIG. 10 illustrates a process in which the multi-bar structure 610 is inserted into the rail frame 620 while being coupled to the flexible display 630 (e.g., the flexible display 230 of FIG. 2A). The multi-bar structure 610 and the rail frame 620 illustrated in FIGS. 10 to 12 may be identical or similar to the multi-bar structure 610 and the rail frame 620 illustrated in FIGS. 6 to 9. Hereinafter, duplicate descriptions are omitted.

Referring to FIG. 10, the supporting member 612 and 613 of the multi-bar structure 610 is inserted into the guide rail 621 of the rail frame 620, in which case it may be inserted by sliding through the opening 623 of the guide rail 621 positioned on the circumferential surface 627 of the rail frame 620. Even when the multi-bar structure 610 is separated from the rail frame 620, the multi-bar structure 610 may be separated through the opening 623 of the guide rail 621.

According to various embodiments, the cross-sectional size of the stop groove 622 may be greater than the cross-sectional size of the stop portion 613. Accordingly, the stop portion 613 may move in the length direction of the bar 611 in the stop groove 622. Since the multi-bar structure 610 is guided and moved by the support 624 of the guide rail 621, the stop surface 6131 of the stop portion 613 need not always contact the stop jaw 6221 of the stop groove 622.

According to an embodiment, when the body 614 of the bar 611 is bent by an external force, the supporting member 612 and 613 may escape off in the direction (direction F) in which it escapes off. In various embodiments of the disclosure, the stop surface 6131 of the stop portion 613 and the stop jaw 6221 of the stop groove 622 may contact each other, thereby preventing the supporting member 612 and 613 from escaping off in direction F. The stop surface 6131 of the stop portion 613 and the stop jaw 6221 of the stop groove 622 may selectively contact each other, and may contact each other mainly in a section where a force is generated in direction F. The section where the force is generated in direction F may be, e.g., a section when passing through a curved portion (e.g., the second rail 621b of FIG. 25) of the rail frame 620. When the bar 611 passes through the curved portion (e.g., the second rail 621b) of the guide rail 621, the body 614 of the bar 611 may be bent outward to generate a force in direction F. Accordingly, the stop jaw 6221 provided on the guide rail 621 may prevent the bar 611 from escaping from the rail frame 620 when the bar 611 passes through the curved portion (e.g., the second rail 621b) of the guide rail 621.

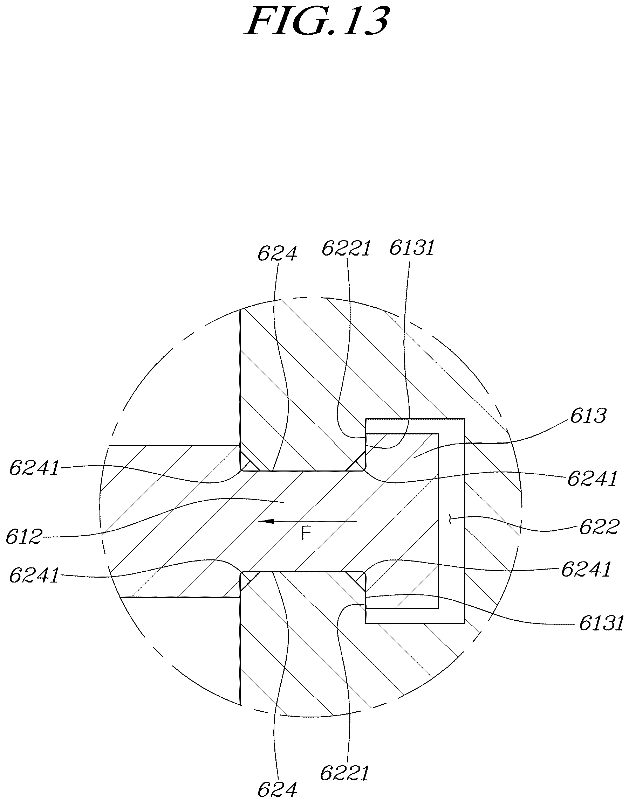

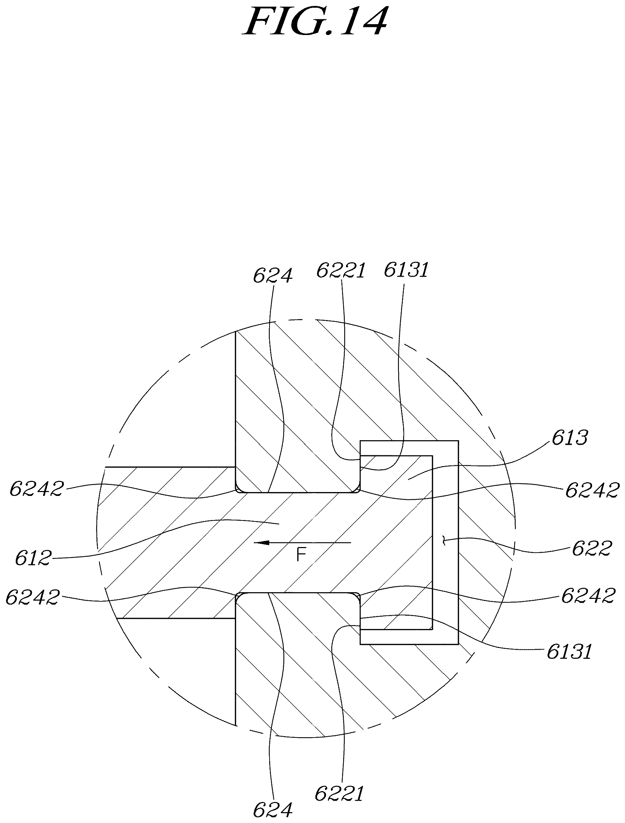

FIG. 13 is a view illustrating a chamfered edge portion of a guide rail in the structure of FIG. 12. FIG. 14 is a view illustrating a rounded edge portion of a guide rail in the structure of FIG. 12.

The rail frame 620 and the bar 611 illustrated in FIGS. 13 and 14 may be similar to the rail frame 620 and the bar 611 illustrated in FIGS. 6 to 9. Therefore, a description of portions common to those described with reference to FIGS. 6 to 9 is omitted.

According to various embodiments, as illustrated in FIGS. 13 and 14, the edges 6241 and 6242 of the support 624 may be chamfered or rounded. By chamfering or rounding the edges 6241 and 6242 of the support 624, operability may be enhanced when each bar 611 moves on the guide rail 621. Further, noise generated due to the movement of each bar 611 when each bar 611 moves on the guide rail 621 may be reduced.

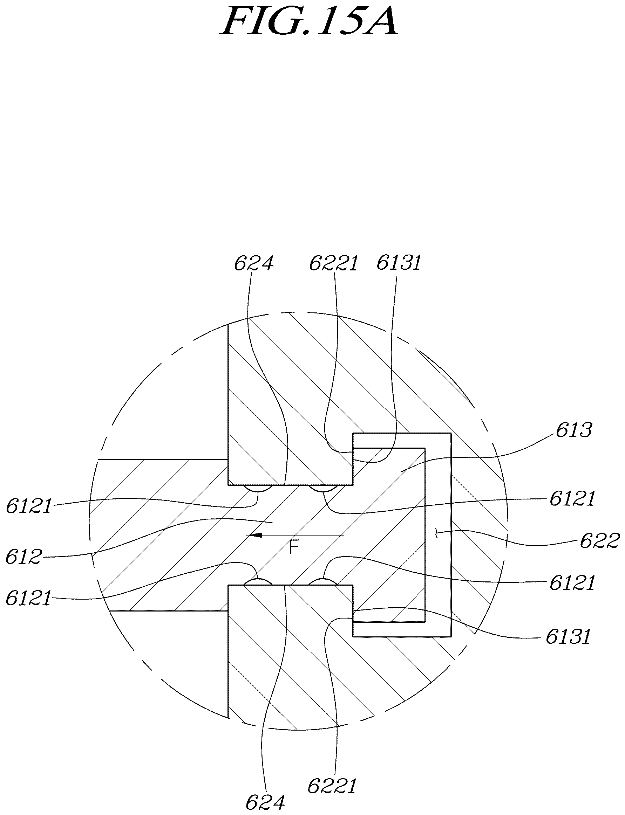

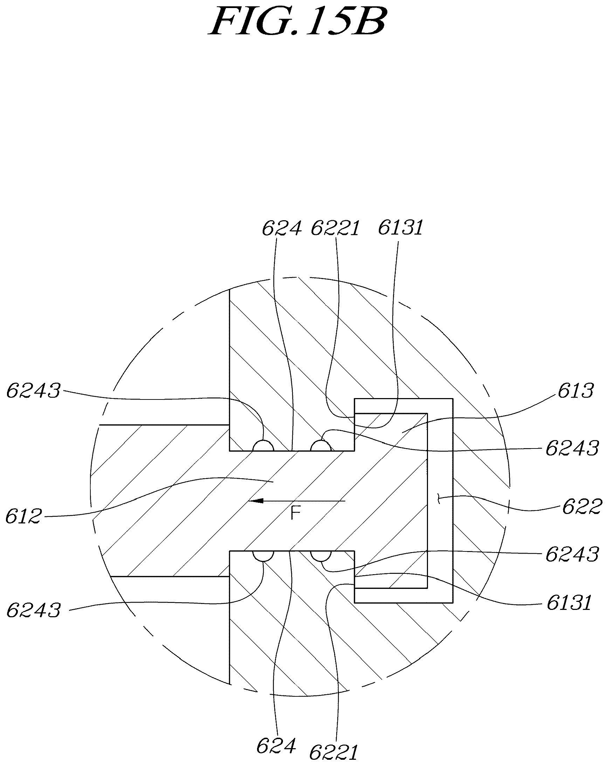

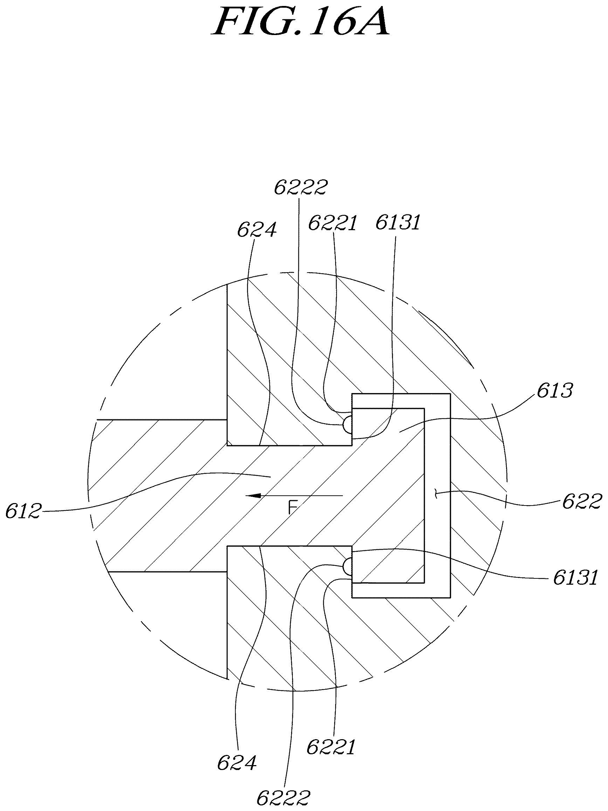

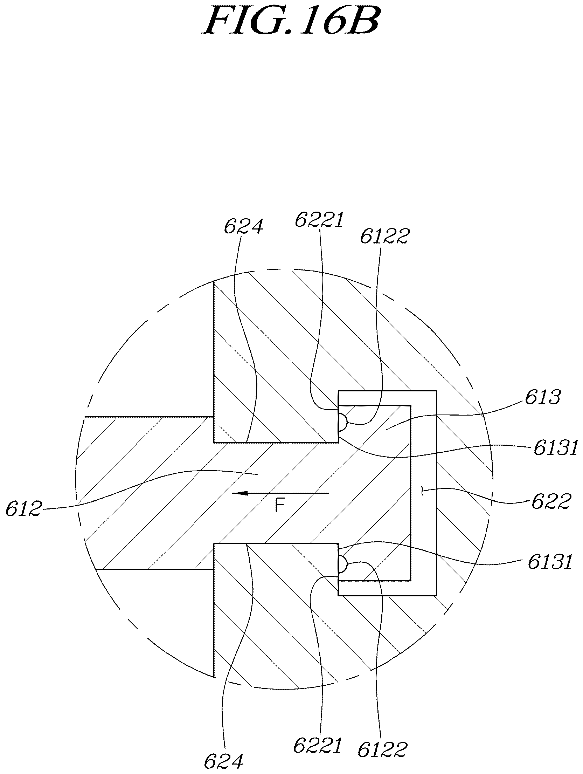

FIGS. 15A, 15B, 16A, and 16B are views illustrating various embodiments in which a groove is formed in a portion of a multi-bar structure or a portion of a rail frame in the structure of FIG. 12.

The rail frame 620 and the bar 611 illustrated in FIGS. 15A, 15B, 16A, and 16B may be similar to the rail frame 620 and the bar 611 illustrated in FIGS. 6 to 9. Therefore, a description of portions common to those described with reference to FIGS. 6 to 9 is omitted.

According to various embodiments, grooves 6121, 6122, 6222, and 6243 of various shapes may be formed in a surface where the supporting member 612 and 613 of the bar 611 and the guide rail 621 contact each other. A lubricant (e.g., grease) may be applied to the groove formed in the surface where the supporting member 612 and 613 of the bar 611 and the guide rail 621 contact each other, thereby enhancing the lubrication of the supporting member 612 and 613.

When a groove for applying a lubricant is formed in the body 614 side of the bar 611, the rigidity of the body 614 may be reduced. However, according to various embodiments of the disclosure, when a groove is formed in a portion of the inner surface of the supporting member 612 and 613 of the bar 611 or the guide rail 621, the rigidity of the body 614 may be maintained while enhancing lubrication.

According to an embodiment, the supporting member 612 and 613 may include at least one first groove 6121 in a portion of the guide rail 621 that is in contact with the support 624. Specifically, the driving shaft 612 may include at least one first groove 6121 formed in a portion that is in contact with the support 624. The driving shaft 612 may include, e.g., at least one first groove 6121 formed along the outer circumferential surface of the driving shaft 612. The first groove 6121 may be formed to extend in the circumferential direction along the circumference of the driving shaft 612.

According to an embodiment, the guide rail 621 may include at least one second groove 6243 in the support 624. The guide rail 621 may include, e.g., at least one second groove 6243 extending along the moving direction of the plurality of bars 611 in the inner circumferential surface of the guide rail 621. The second groove 6243 may be formed to extend, e.g., along a direction in which the bar 611 moves on the guide rail 621.

According to an embodiment, the guide rail 621 may include at least one third groove 6222 formed in the stop jaw 6221 of the stop groove 622. The third groove 6222, e.g., may be formed to extend along a direction in which the bar 611 moves the guide rail 621.

According to an embodiment, the supporting member 612 and 613 may include at least one fourth groove 6122 in the stop surface 6131 of the stop portion 613. The stop portion 613 may include, e.g., at least one fourth groove 6122 formed in a surface in contact with the stop jaw 6221. The fourth groove 6122 may be formed to extend in the circumferential direction along, e.g., the stop surface 6131.

The first groove 6121 to the fourth groove 6122 are illustrated in a semicircular cross-sectional shape, but are not limited thereto.

The position of the groove for receiving the lubricant is not limited to that illustrated, and two or more of the first groove 6121 to the fourth groove 6122 may be combined to form the groove for receiving the lubricant.

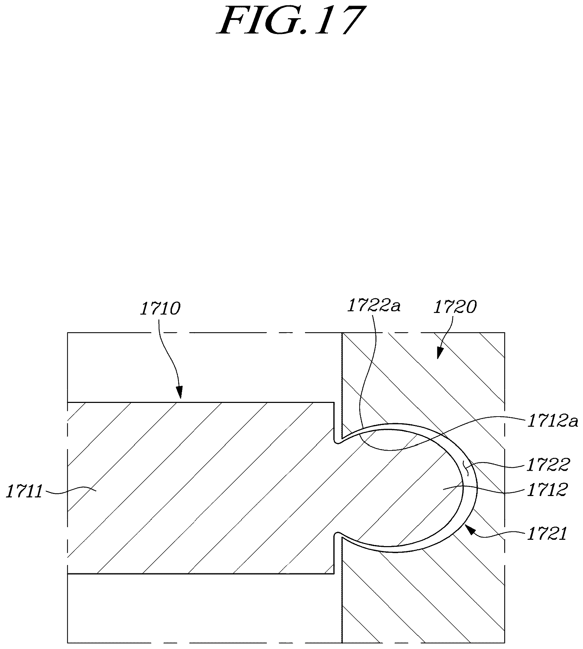

FIG. 17 is an enlarged cross-sectional view illustrating a portion where a multi-bar structure is mounted on a rail frame according to another embodiment of the disclosure.

The rail frame 1720 or the bar 1710 illustrated in FIG. 17 may have a configuration partially in common with the rail frame 620 or the bar 611 of FIGS. 6 to 9. Hereinafter, a description of the common configuration is omitted.

According to an embodiment, the bar 1710 may include supporting members 1712 at two opposite ends thereof. The supporting member 1712 may have a substantially circular or elliptical cross-sectional shape. The supporting member 1712, e.g., may be formed overall of a curved surface. A groove in which the stop jaw 1722a is positioned may be formed between the body 1711 of the bar 1710 and the supporting member 1712. A portion of the outer circumferential surface of the supporting member 1712 adjacent to the body 1711 side may be a stop surface 1712a for preventing the bar 1710 from escaping off. Here, the supporting member 1712 itself may serve as a stop portion. In other words, in the embodiment of FIG. 17, the driving shaft portion may be omitted from the supporting member 1712.

According to an embodiment, the rail frame 1720 may include a guide rail 1721. The cross-sectional shape of the guide rail 1721 may correspond to the cross-sectional shape of the supporting member 1712. According to an embodiment, the guide rail 1721 may include a stop groove 1722. A stop jaw 1722a that may contact the stop surface 1712a of the supporting member 1712 may be provided on a portion of the surface of the stop groove 1722.

According to an embodiment, at least one groove for receiving a lubricant to the surface of the supporting member 1712 or the guide rail 1721 may be formed in a portion of the surface where the supporting member 1712 and the guide rail 1721 contact each other, similar to those illustrated in FIGS. 15A, 15B, 16A, and 16B.

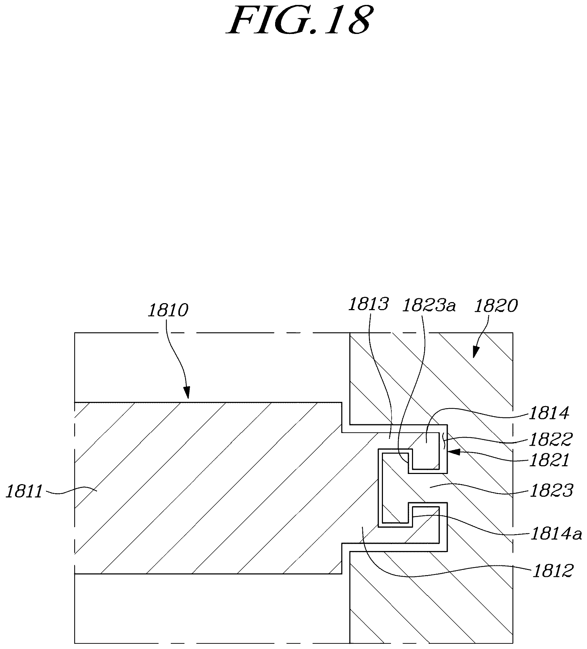

FIG. 18 is an enlarged cross-sectional view illustrating a portion where a multi-bar structure is mounted on a rail frame according to another embodiment of the disclosure.

The rail frame 1820 and the bar 1810 illustrated in FIG. 18 may have a configuration partially in common with the rail frame 620 and the bar 611 of FIGS. 6 to 9. Hereinafter, a description of the common configuration is omitted.

According to an embodiment, the bar 1810 may include a supporting member 1812, 1813, and 1814 provided at two opposite ends of the body 1811. According to an embodiment, the supporting member 1812, 1813, and 1814 may include a driving shaft 1812, a driving shaft groove 1813, or a stop portion 1814. The driving shaft groove 1813 may be formed to face, e.g., the inside of the supporting member 1812, 1813, and 1814. For example, the driving shaft groove 1813 may be provided to face the inside of the supporting member 1812, 1813, and 1814 so as not to be visible when viewed from the outside. There may be provided a structure in which as at least a portion of the protrusion 1823 is received in the space formed inside the driving shaft groove 1813, the supporting member 1812, 1813, and 1814 and the protrusion 1823 may be engaged with each other and be stuck or engaged.

According to an embodiment, the bar 1810 may include a stop portion 1814 positioned in a direction of the end of the supporting member 1812, 1813, and 1814 with respect to the driving shaft groove 1813. The stop portion 1814 may be formed to extend inward from the end of the supporting member 1812, 1813, and 1814. Here, the inner direction may refer to, e.g., a direction parallel to a direction perpendicular to the length direction of the body 1811, but is not limited thereto, and may refer to a direction inclined at a predetermined angle from the direction perpendicular to the length direction of the body 1811. The stop portion 1814 may have a stop surface 1814a in a surface of the bar 1810 facing the body 1811. The stop surface 1814a of the stop portion 1814 may be stuck or engaged by the protrusion 1823 protruding in the guide rail 1821 to prevent the bar 1810 from escaping off(or from detaching).

According to an embodiment, the rail frame 1820 may include a guide rail 1821. According to an embodiment, the guide rail 1821 may include a stop groove 1822. The stop portion 1814 may be received in the space of the stop groove 1822.

According to an embodiment, the guide rail 1821 may include a protrusion 1823 protruding from a surface of the stop groove 1822. The protrusion 1823 may have, e.g., a substantially T-shape. The protrusion 1823 may extend and protrude along the length direction of the body 1811 of the bar 1810. A portion of the protrusion 1823 may be received in a space formed by the driving shaft groove 1813. The protrusion 1823 may include a stop jaw 1823a that may contact the stop surface 1814a of the stop portion 1814.

According to an embodiment, at least one groove for receiving a lubricant may be formed in the surface of the supporting member 1812, 1813, and 1814 or the guide rail 1821, in a portion of the surface where the supporting member 1812, 1813, and 1814 and the guide rail 1821 contact each other, similar to those illustrated in FIGS. 15A, 15B, 16A, and 16B.

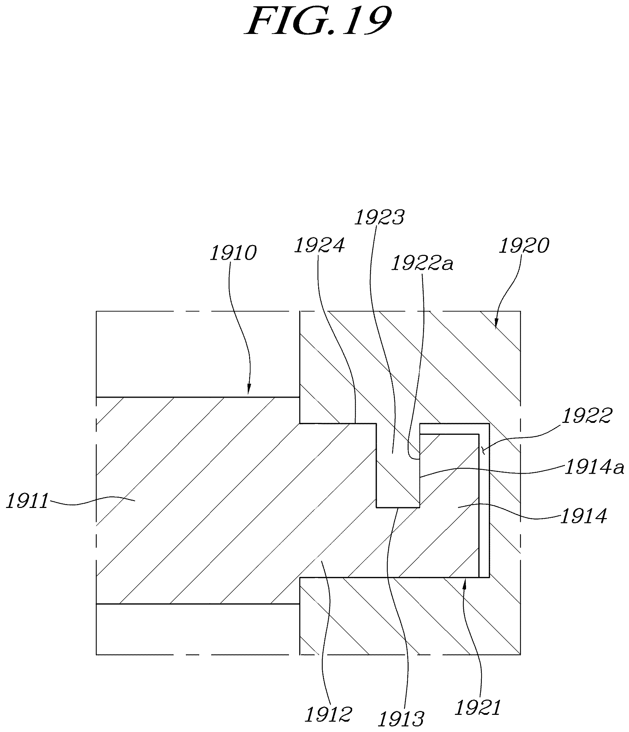

FIG. 19 is an enlarged cross-sectional view illustrating a portion where a multi-bar structure is mounted on a rail frame according to another embodiment of the disclosure.

The rail frame 1920 and the bar 1910 illustrated in FIG. 19 may have a configuration partially in common with the rail frame 620 and the bar 611 of FIGS. 6 to 9. Hereinafter, a description of the common configuration is omitted.

According to an embodiment, the bar 1910 may include a supporting member 1912, 1913, and 1914 at two opposite ends thereof. According to an embodiment, the supporting member 1912, 1913, and 1914 may include a driving shaft 1912, a driving shaft groove 1913, or a stop portion 1914. The driving shaft groove 1913 may be formed to be dug in a portion of the outer circumferential surface of the supporting member 1912, 1913, and 1914. There may be formed a structure in which a portion of the supporting member 1912, 1913, and 1914 may be stuck or engaged inside the guide rail 1921 by the driving shaft groove 1913.

According to an embodiment, the bar 1910 may include a stop portion 1914 positioned in a direction of the end of the supporting member 1912, 1913, and 1914 with respect to the driving shaft groove 1913. The stop portion 1914 may have a stop surface 1914a in a surface of the bar 1910 facing the body 1911. The stop surface 1914a of the stop portion 1914 may be stuck or engaged in the guide rail 1921 to prevent the bar 1910 from escaping off (or from detaching). The diameter of the stop portion 1914 may be equal to or smaller than the diameter of a portion of the driving shaft 1912 in contact with the support 1924 of the guide rail 1921.

According to an embodiment, the rail frame 1920 may include a guide rail 1921. The cross-sectional shape of the guide rail 1921 may correspond to the cross-sectional shapes of the supporting member 1912, 1913, and 1914. According to an embodiment, the guide rail 1921 may include a stop groove 1922. The stop portion 1914 may be received in the space of the stop groove 1922. A stop jaw 1922a that may contact the stop surface 1914a of the stop portion 1914 may be provided on a portion of the surface of the stop groove 1922.

According to an embodiment, the guide rail 1921 may include a stop protrusion 1923 corresponding to the driving shaft groove 1913. The stop protrusion 1923 may be inserted into the driving shaft groove 1913 to prevent the bar 1910 from escaping off.

According to an embodiment, the guide rail 1921 may include a support 1924 supporting at least a portion of the driving shaft 1912.

According to an embodiment, at least one groove for receiving a lubricant may be formed in the surface of the supporting member 1912, 1913, and 1914 or the guide rail 1921, in a portion of the portion where the supporting member 1912, 1913, and 1914 and the guide rail 1921 contact each other, similar to those illustrated in FIGS. 15A, 15B, 16A, and 16B.

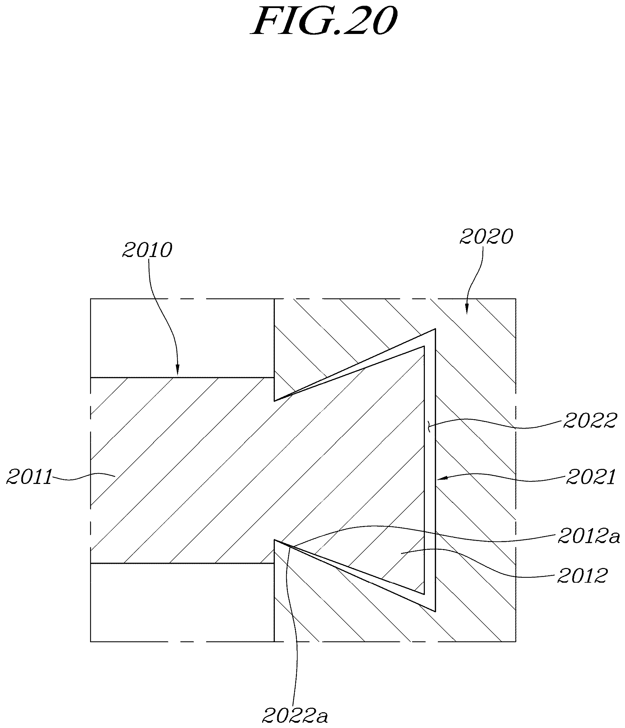

FIG. 20 is an enlarged cross-sectional view illustrating a portion where a multi-bar structure is mounted on a rail frame according to another embodiment of the disclosure.

The rail frame 2020 or the bar 2010 illustrated in FIG. 20 may have a configuration partially in common with the rail frame 620 or the bar 611 of FIGS. 6 to 9. Hereinafter, a description of the common configuration is omitted.

According to an embodiment, the bar 2010 may include supporting members 2012 at two opposite ends thereof. According to an embodiment, as the supporting member 2012 approaches the end portion, the diameter of the supporting member 2012 may increase. As the diameter of the supporting member 2012 increases toward the end portion, the outer circumferential surface of the supporting member 2012 may be formed to be inclined. A portion of the inclined outer circumferential surface of the supporting member 2012 may be a stop surface 2012a for preventing the bar 2010 from escaping off. Here, the supporting member 2012 itself may serve as a stop portion. In other words, the driving shaft portion may be omitted from the supporting member 2012.

According to an embodiment, the rail frame 2020 may include a guide rail 2021. The cross-sectional shape of the guide rail 2021 may correspond to the cross-sectional shape of the supporting member 2012. According to an embodiment, the guide rail 2021 may include a stop groove 2022. A stop jaw 2022a that may contact the stop surface 2012a of the supporting member 2012 may be provided on a portion of the surface of the stop groove 2022.

According to an embodiment, at least one groove for receiving a lubricant to the surface of the supporting member 2012 or the guide rail 2021 may be formed in a portion of the portion where the supporting member 2012 and the guide rail 2021 contact each other, similar to those illustrated in FIGS. 15A, 15B, 16A, and 16B.

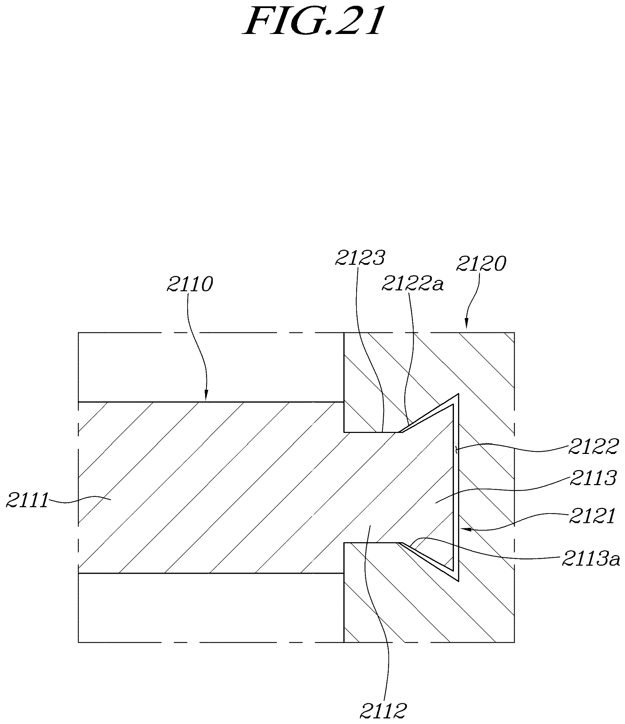

FIG. 21 is an enlarged cross-sectional view illustrating a portion where a multi-bar structure is mounted on a rail frame according to another embodiment of the disclosure.

The rail frame 2120 or the bar 2110 illustrated in FIG. 21 may have a configuration partially in common with the rail frame 620 or the bar 611 of FIGS. 6 to 9. Hereinafter, a description of the common configuration is omitted.

According to an embodiment, the bar 2110 may include a supporting member 2112 and 2113 at two opposite ends thereof. According to an embodiment, the supporting member 2112 and 2113 may include a driving shaft 2112 and a stop portion 2113 formed by increasing in diameter from the end portion of the driving shaft 2112 toward the end portion. In other words, the stop portion 2113 may have an upward inclination in the direction of the end of the driving shaft 2112.

According to an embodiment, the stop portion 2113 may have a stop surface 2113a on a surface of the bar 2110 that faces the body 2111. The stop surface 2113a may be a portion of an upwardly inclined outer circumferential surface of the stop portion 2113. The stop surface 2113a of the stop portion 2113 may be stuck or engaged in the guide rail 2121 to prevent the bar 2110 from escaping off(or from detaching).

According to an embodiment, the rail frame 2120 may include a guide rail 2121. The cross-sectional shape of the guide rail 2121 may correspond to the cross-sectional shapes of the supporting member 2112 and 2113. According to an embodiment, the guide rail 2121 may include a stop groove 2122. The stop portion 2113 may be received in the space of the stop groove 2122. A stop jaw 2122a that may contact the stop surface 2113a of the stop portion 2113 may be provided on a portion of the surface of the stop groove 2122.

According to an embodiment, the guide rail 2121 may include a support 2123 supporting at least a portion of the driving shaft 2112.

According to an embodiment, at least one groove for receiving a lubricant to the surface of the supporting member 2112 or the guide rail 2121 may be formed in a portion of the portion where the supporting member 2112 and 2113 and the guide rail 2121 contact each other, similar to those illustrated in FIGS. 15A, 15B, 16A, and 16B.

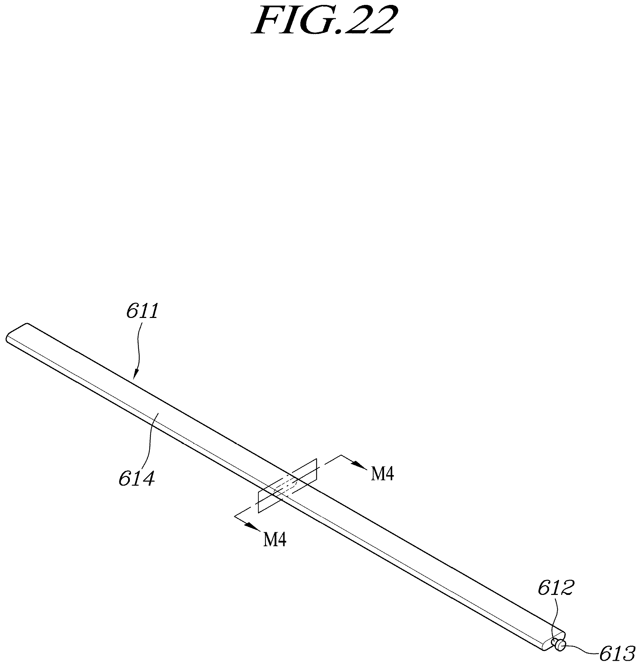

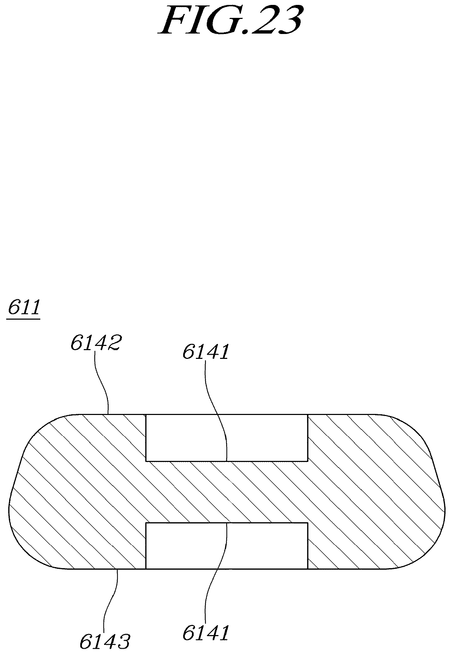

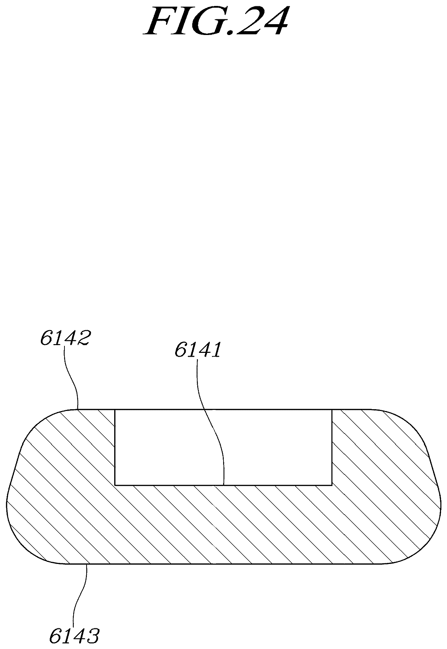

FIG. 22 is a perspective view illustrating one bar of a multi-bar structure according to an embodiment of the disclosure. FIGS. 23 and 24 are cross-sectional views illustrating a bar, taken along portion M4 of FIG. 22 according to various embodiments.

The bar 611 illustrated in FIGS. 22 to 24 may be a bar 611 constituting the multi-bar structure 610 illustrated in FIGS. 6 to 8. Hereinafter, descriptions overlapping those of the bar 611 described with reference to FIGS. 6 to 8 are omitted.

According to various embodiments, at least one body groove may be formed in the bar 611. For example, at least one body groove may be formed in the upper surface 6142 or the lower surface 6143 of the bar 611. The body groove formed here may be formed along the length direction of the body 614 of the bar 611.

According to an embodiment, as illustrated in FIG. 23, the bar 611 may have a body groove 6141 formed in an upper surface 6142 and a lower surface 6143. The body groove 6141 may be formed in the upper surface 6142 and the lower surface 6143 of the bar 611 to have a substantially H-shaped cross section.

According to an embodiment, the bar 611 may have the body groove 6141 formed only in one surface thereof. For example, the body groove 6141 may be formed only in the upper surface 6142 as illustrated in FIG. 24.

When the thickness of the bar 611 decreases, the receiving space inside the housing (e.g., the first housing 210 or the second housing 220 of FIG. 2A) may be widened, but it may not withstand the repulsive force in the second rail 621b and may thus be bent and escape from the rail frame 620. In various embodiments of the disclosure, the body groove 6141 may be formed in at least one of the upper surface 6142 and the lower surface 6143 in the body 614 of the bar 611, thereby enhancing the secondary cross-sectional moment of the bar 611. As a result of enhancing the secondary cross-sectional moment, the degree of bending of the bar 611 may be maintained even when the thickness of the bar is decreased, and as a result, the proportion of the multi-bar structure 610 occupying the space inside the housing (e.g., the first housing 210 or the second housing 220) is reduced, so that a wider receiving space inside the housing (e.g., the first housing 210 or the second housing 220) may be used. For example, it may be possible to receive a larger, resultantly higher-capacity, battery (e.g., the battery 290 of FIG. 4) in the housing (e.g., the first housing 210 or the second housing 220).

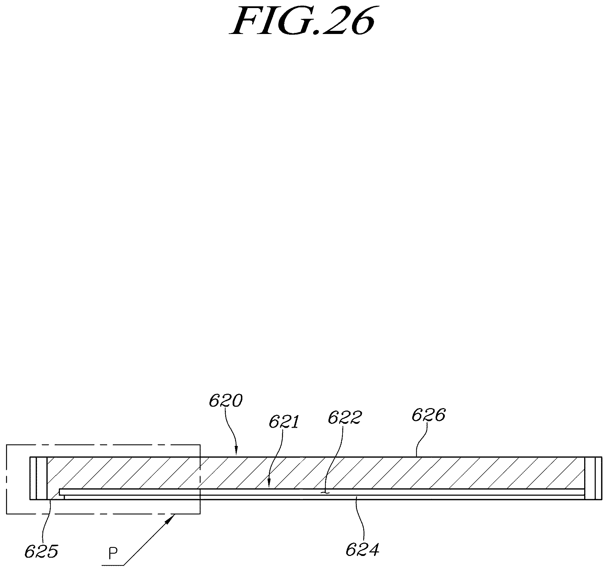

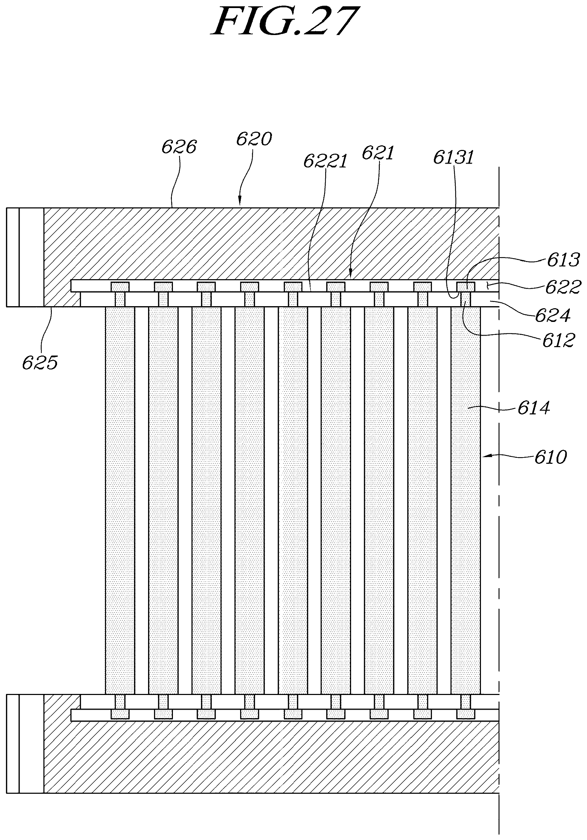

FIG. 25 is a perspective view illustrating a rail frame according to an embodiment of the disclosure. FIG. 26 is a cross-sectional view taken along portion M5 of FIG. 25. FIG. 27 is a view illustrating a rail frame and a multi-bar structure according to an embodiment of the disclosure.

The rail frame 620 illustrated in FIGS. 25 to 27 may be the same as the rail frame 620 illustrated in FIGS. 6, 7, and 9. Further, the rail frame 620 illustrated in FIGS. 25 to 27 may be the same as the rail frame 224 illustrated in FIG. 4. Hereinafter, duplicate descriptions are omitted.

According to an embodiment, the guide rail 621 may include a first rail 621a, a second rail 621b, and/or a third rail 621c.

According to an embodiment, the first rail 621a may be positioned at an upper portion of the inner surface 625 of the rail frame 620. The first rail 621a may have, e.g., a straight path. An opening 623 into which the multi-bar structure 610 is inserted may be provided at one end of the first rail 621a. The other end of the first rail 621a may be connected to the second rail 621b. A flexible display (e.g., the flexible display 230 of FIG. 2A) corresponding to a portion of the multi-bar structure 610 positioned on the first rail 621a may be in a flat state. Further, the flexible display 230 positioned at a portion corresponding to the first rail 621a may be visible from the outside.

According to an embodiment, the second rail 621b may be positioned on a side portion of the inner surface 625 of the rail frame 620. The second rail 621b may have, e.g., a curved path. One end of the second rail 621b may be connected to the other end of the first rail 621a. The other end of the second rail 621b may be connected to one end of the third rail 621c. In other words, the second rail 621b may be a rail connecting the first rail 621a and the third rail 621c. The flexible display 230 corresponding to a portion of the multi-bar structure 610 positioned on the second rail 621b may be in a curved state (a bent state). A bar 611 positioned on the second rail 621b of the multi-bar structure 610 may be bent by a repulsive force generated outward.

According to an embodiment, the third rail 621c may be positioned at a lower portion of the inner surface 625 of the rail frame 620. The third rail 621c may have, e.g., a straight path. One end of the third rail 621c may be connected to the other end of the second rail 621b. The flexible display 230 corresponding to a portion of the multi-bar structure 610 positioned on the third rail 621c may be in a flat state. Further, a portion of the flexible display 230 positioned at a portion corresponding to the third rail 621c may not be visible from the outside.

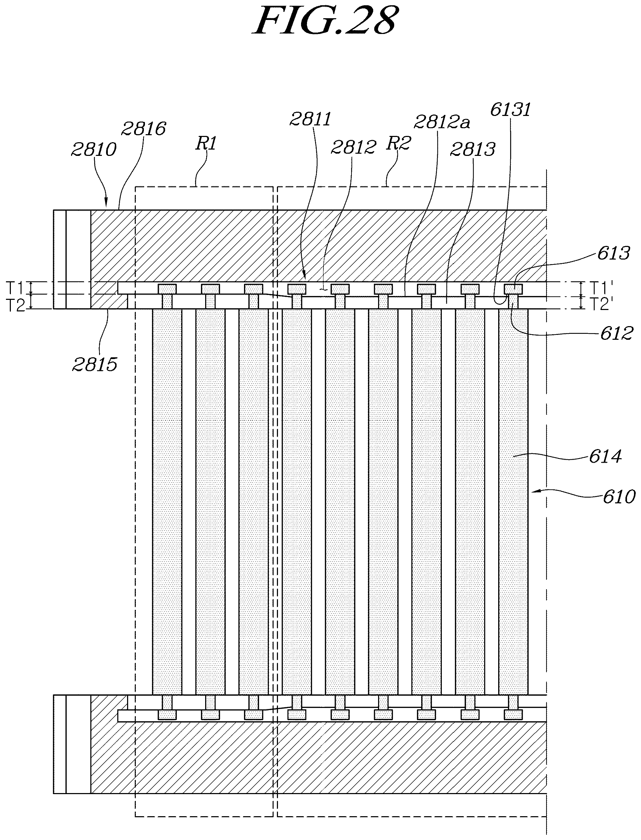

FIG. 28 is a view schematically illustrating a rail frame and a multi-bar structure according to another embodiment of the disclosure.

In describing FIGS. 28 to 30, the first portion R1 may refer to at least a portion of the second rail 621b of FIG. 25, and the second portion R2 may refer to at least a portion of the first rail 621a of FIG. 25. The first portion R1 of FIGS. 28 to 30 may be a portion where bending may occur in a portion of the multi-bar structure 610 by a repulsive force. In FIGS. 28 to 30, for convenience of description, a structure of another guide rail positioned on the opposite side of the multi-bar structure 610 is omitted. The first portion R1 may be, e.g., a portion corresponding to a portion in which the flexible display (e.g., the flexible display 230 of FIG. 2A) is in a bent state. The second portion R2 may be, e.g., a portion corresponding to a portion in which the flexible display 230 is in a flat state.

The feature of the first portion R1 described with reference to FIGS. 28 to 30 may be applied to the second rail 621b of FIG. 25, and the feature of the second portion R2 may be applied to the first rail 621a and/or the third rail 621c of FIG. 25.

The multi-bar structure 610 and the rail frame 2810 illustrated in FIG. 28 may replace the multi-bar structure 240 and the rail frame 224 of the electronic device 200 illustrated in FIG. 4. The multi-bar structure 610 and the rail frame 2810 illustrated in FIG. 28 may have a configuration partially in common with the multi-bar structure 610 and the rail frame 620 of FIGS. 6 to 9. Hereinafter, a description of the common configuration is omitted.

Referring to FIG. 28, the rail frame 2810 according to an embodiment may include a guide rail 2811 that have different widths, as the widths T2 and T2' of the support 2813 and/or the widths T1 and T1' of the rail groove 2812 depending on the section.

According to an embodiment, in the guide rail 2811, the width T2 of the support 2813 in the first portion R1 may be greater than the width T2' of the support 2813 in the second portion R2. The width T2 of the support 2813 in the first portion R1 may correspond to, e.g., an interval between the stop surface 6131 of the stop portion 613 and the body 614. As such, as the width of the support 2813 is varied depending on the sections, at least a portion of the multi-bar structure 610 may be moved while the stop surface 6131 of the stop portion 613 contacts the stop jaw 2812a of the stop groove 2812 in the first portion R1 and, in the second portion R2, at least a portion of the multi-bar structure 610 may be moved with the stop surface 6131 of the stop portion 613 spaced apart from the stop jaw 2812a of the stop groove 2812. In other words, the stop surface 6131 of the stop portion 613 and the stop jaw 2812a of the stop groove 2812 may be configured to contact each other only in the section where a repulsive force is generated in the multi-bar structure 610 to generate an escaping force (e.g., the escaping force in direction F of FIG. 12) due to bending, thereby canceling out the escaping force. Further, in the section where a repulsive force is not generated in the multi-bar structure 610, a gap may be left to generate no frictional force between the stop surface 6131 of the stop portion 613 and the stop jaw 2812a of the stop groove 2812 when the multi-bar structure 610 moves, enhancing the operation performance of the multi-bar structure 610.

As illustrated, the width T1 of the rail groove 2812 in the first portion R1 of the guide rail 2811 may be less than the width T1' of the rail groove 2812 in the second portion R2, but is not limited thereto. The width T1 of the rail groove 2812 in the first portion R1 may be greater than or equal to the width T1' of the rail groove 2812 in the second portion R2.

According to an embodiment, the sum of the width T1 of the rail groove 2812 and the width T2 of the support 2813 in the first portion R1 may be equal to the sum of the width T1' of the rail groove 2812 and the width T2' of the support 2813 in the second portion R2. According to an embodiment, the sum of the width T1 of the rail groove 2812 and the width T2 of the support 2813 in the first portion R1 may be greater than the sum of the width T1' of the rail groove 2812 and the width T2' of the support 2813 in the second portion R2.

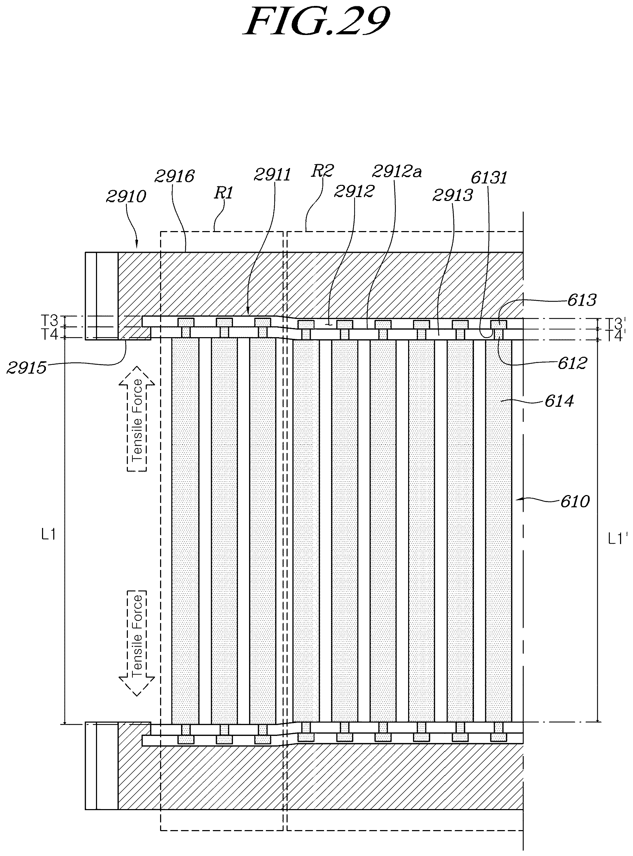

FIG. 29 is a view schematically illustrating a rail frame and a multi-bar structure according to another embodiment of the disclosure.

In FIG. 29, for convenience of description, a structure of another guide rail positioned on the opposite side of the multi-bar structure 610 is omitted. The multi-bar structure 610 and the rail frame 2910 illustrated in FIG. 29 may replace the multi-bar structure 240 and the rail frame 224 of the electronic device 200 illustrated in FIG. 4. The multi-bar structure 610 and the rail frame 2910 illustrated in FIG. 29 may have a configuration partially in common with the multi-bar structure 610 and the rail frame 620 of FIGS. 6 to 9. Hereinafter, a description of the common configuration is omitted.

Referring to FIG. 29, although not illustrated, the rail frame 2910 according to an embodiment may be provided as illustrated in FIG. 4, with a pair of rail frames 2910 on two opposite sides of the multi-bar structure 610, and the guide rail 2911 may be configured so that the distance between the respective stop jaws 2912a of the pair of rail frames 2910 in the first portion R1 is greater than the distance between the respective stop jaws 2912a of the pair of rail frames 2910 in the second portion R2. By increasing the distance between the respective stop jaws 2912a of the pair of rail frames 2910 in the first portion R1, a tensile force may be formed in a portion of the multi-bar structure 610 positioned in the first portion R1. In a portion of the multi-bar structure 610 positioned in the first portion R1, the body 614 may be extended outward in the length direction by the tensile force. Accordingly, the length L1 of the body 614 positioned in the first portion R1 may be greater than the length L1' of the body 614 positioned in the second portion R2. The degree of bending of the body 614 extended by the tensile force may be reduced from the repulsive force. As a result, the flexible display 230 may be protected by reducing deformation of the flexible display (e.g., the flexible display 230 of FIG. 2A) attached to the multi-bar structure 610.

According to an embodiment, the width T4 of the support 2913 in the first portion R1 may be equal to the width T4' of the support 2913 in the second portion R2. According to an embodiment, the width T3 of the stop groove 2912 in the first portion R1 may be equal to the width T3' of the stop groove 2912 in the second portion R2.

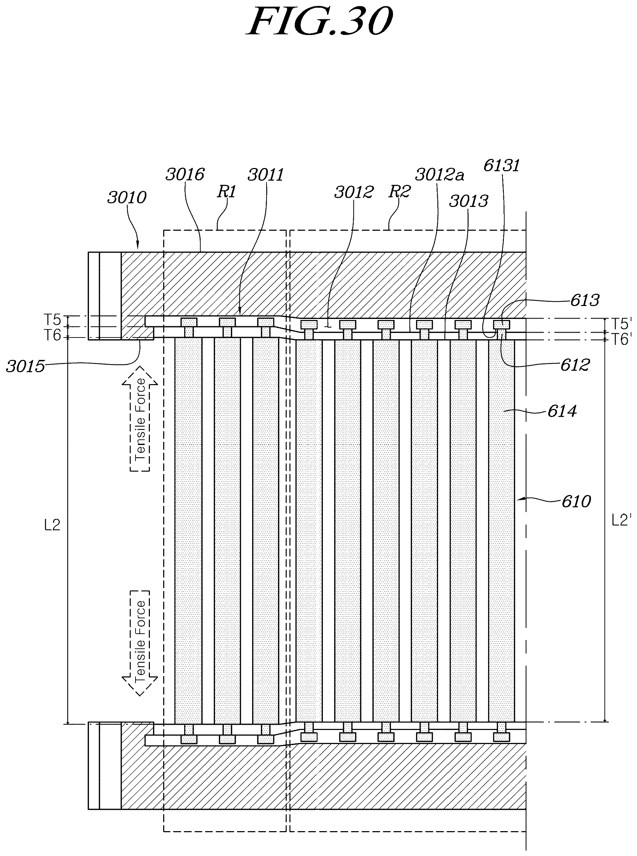

FIG. 30 is a view schematically illustrating a rail frame and a multi-bar structure according to another embodiment of the disclosure.

In FIG. 30, for convenience of description, a structure of another guide rail positioned on the opposite side of the multi-bar structure 610 is omitted. The multi-bar structure 610 and the rail frame 3010 illustrated in FIG. 30 may replace the multi-bar structure 240 and the rail frame 224 of the electronic device 200 illustrated in FIG. 4. The multi-bar structure 610 and the rail frame 3010 illustrated in FIG. 30 may have a configuration partially in common with the multi-bar structure 610 and the rail frame 620 of FIGS. 6 to 9. Hereinafter, a description of the common configuration is omitted.

Referring to FIG. 30, the rail frame 3010 according to an embodiment may include a guide rail 3011 that has different widths, as the widths T6 and T6' of the support 3013 and/or the widths T5 and T5' of the rail groove 3012 depending on the section. Further, the rail frame 3010 according to the embodiment illustrated in FIG. 30 may have a structure in which a portion of the multi-bar structure 610 is stretched in the first portion R1, as in the rail frame 2910 illustrated in FIG. 29.

According to an embodiment, although not illustrated, the rail frame 3010 may be provided as illustrated in FIG. 4, with a pair of rail frames 3010 on two opposite sides of the multi-bar structure 610, and the guide rail 3011 may be configured so that the distance between the respective stop jaws 3012a of the pair of rail frames 3010 in the first portion R1 is greater than the distance between the respective stop jaws 3012a of the pair of rail frames 3010 in the second portion R2. By increasing the distance between the respective stop jaws 3012a of the pair of rail frames 3010 in the first portion R1, a tensile force may be formed in a portion of the multi-bar structure 610 positioned in the first portion R1.

According to an embodiment, in the guide rail 3011, the width T6 of the support 3013 in the first portion R1 may be greater than the width T6' of the support 3013 in the second portion R2. The width T6 of the support 3013 in the first portion R1 may correspond to, e.g., an interval between the stop surface 6131 of the stop portion 613 and the body 614. As such, as the width of the support 3013 is varied depending on the sections, at least a portion of the multi-bar structure 610 may be moved while the stop surface 6131 of the stop portion 613 contacts the stop jaw 3012a of the stop groove 3012 in the first portion R1 and, in the second portion R2, at least a portion of the multi-bar structure 610 may be moved with the stop surface 6131 of the stop portion 613 spaced apart from the stop jaw 3012a of the stop groove 3012. In other words, the stop surface 6131 of the stop portion 613 and the stop jaw 3012a of the stop groove 3012 may be configured to contact each other only in the section where a repulsive force is generated in the multi-bar structure 610 to generate an escaping force (e.g., the escaping force in direction F of FIG. 12) due to bending, thereby canceling out the escaping force.

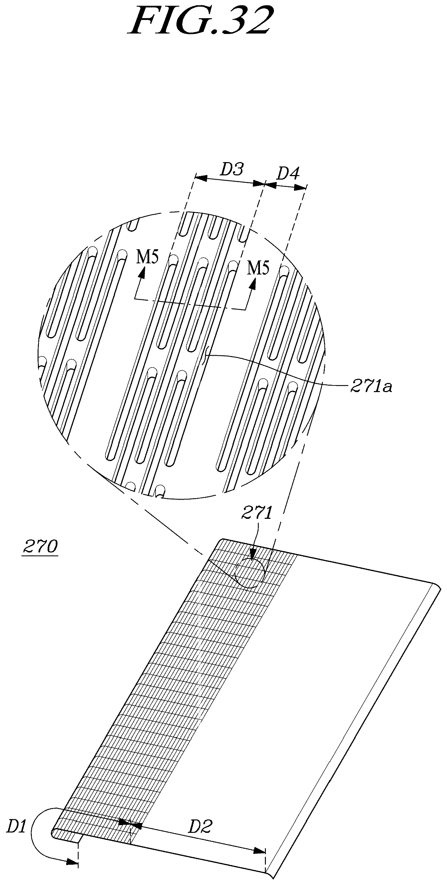

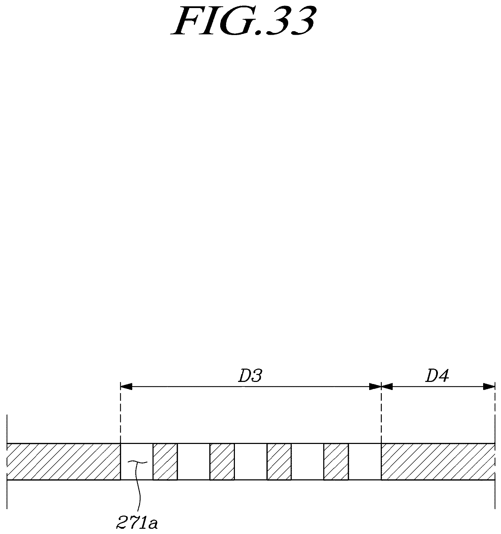

FIG. 31 is a side view illustrating a state in which a flexible display, a bending plate, and a multi-bar structure among components of an electronic device are coupled according to an embodiment of the disclosure. FIG. 32 is a perspective view illustrating a bending plate according to an embodiment of the disclosure. FIG. 33 is a cross-sectional view taken along portion M5 of FIG. 32.

The flexible display 230, the bending plate 270, or the multi-bar structure 240 illustrated in FIGS. 31 to 33 may have substantially the same structure as the flexible display 230, the bending plate 270, and the multi-bar structure 240 illustrated in FIG. 4.

The flexible display 230 or the bending plate 270 may include a bendable flexible area D1 and a non-bendable fixed area D2. At least a portion of the flexible area D1 may be, e.g., a portion corresponding to the second width W2 of FIG. 3A. The fixed area D2 may be, e.g., a portion corresponding to the first width W1 of FIG. 3A.

According to an embodiment, the bending plate 270 may form a lattice structure 271 in at least a portion of the flexible area D1, which is a portion in which the flexible display 230 is bent and disposed. The lattice structure 271 may include a plurality of openings 271a and may contribute to flexibility of the flexible display 230. The lattice structure 271 may be referred to as an 'opening pattern'. The plurality of openings 271a may be formed to be arranged periodically, have substantially the same shape, and may be repeatedly arranged at regular intervals. However, the shape, size, or pattern of the plurality of openings 271a is not limited thereto. The openings 271a of the flexible area D1 may be implemented by, e.g., etching or shearing using a press mold.

Although not shown, the bending plate 270 may include a recess pattern including a plurality of recesses, in place of the lattice structure 271. The recess pattern may contribute to bendability of the flexible display 230. The bending plate 270 including the lattice structure or the recess pattern, or a conductive member corresponding thereto, may be formed of, e.g., a plurality of layers.

According to an embodiment, the flexible area D1 of the bending plate 270 may include a stretch area D3 and a support area D4. A plurality of stretch areas D3 and a plurality of support areas D4 may be alternately disposed. For example, a plurality of openings 271a or a plurality of recesses may be formed in the stretch area D3. For example, openings 271a of a lattice structure may be formed in the stretch area D3. For example, the bar 241 of the multi-bar structure 240 may be attached to the support area D4.

According to an embodiment of the disclosure, an electronic device (e.g., the electronic device 200 of FIG. 2A) comprises a flexible display (e.g., the flexible display 230 of FIG. 2A or the flexible display 630 of FIG. 10), a multi-bar structure (e.g., the multi-bar structure 610 of FIG. 6) including a plurality of bars (e.g., the bar 611 of FIG. 8) spaced apart from each other on a rear surface of the flexible display, and first and second rail frames (e.g., the rail frame 620 of FIG. 6) coupled to two opposite sides of the multi-bar structure. At least one of the plurality of bars includes a supporting member (e.g., the supporting member 612 and 613 of FIG. 8) including a stop portion (e.g., the stop portion 613 of FIG. 8) to allow at least one of the plurality of bars to be engaged with the first and second rail frames and provided on two opposite sides of at least one of the plurality of bars. The first and second rail frames include a guide rail (e.g., the guide rail 621 of FIG. 9) into which the supporting member is inserted to guide the multi-bar structure to move. The guide rail 621 includes a stop jaw (e.g., the stop jaw 6221 of FIG. 9) provided to allow the stop portion to be engaged.

According to an embodiment of the disclosure, the stop portion may be formed so that an outer circumferential surface thereof is inclined as a diameter of the supporting member increases toward an end.

According to an embodiment of the disclosure, the supporting member may be formed so that an outer circumferential surface thereof is inclined as a diameter of the supporting member increases toward an end portion. The stop portion may be formed to face the inclination of the outer circumferential surface.

According to an embodiment of the disclosure, the supporting member may include a groove (e.g., the driving shaft groove 1913 of FIG. 19) formed in a portion of an outer circumferential surface thereof. The stop portion may be positioned in a direction of an end of the supporting member with respect to the groove.

According to an embodiment of the disclosure, a cross-sectional shape of the guide rail may correspond to a cross-sectional shape of the supporting member.

According to an embodiment of the disclosure, at least one of the plurality of bars may have a groove (e.g., the body groove 6141 of FIG. 23) formed, in a length direction of the at least one bar, in at least one of an upper surface (e.g., the upper surface 6142 of FIG. 23) and a lower surface (e.g., the lower surface 6143 of FIG. 23).

According to an embodiment of the disclosure, the guide rail may include a stop groove (e.g., the stop groove 622 of FIG. 10) in which a portion of the supporting member is received and which has the stop jaw with a portion corresponding to the stop portion. The stop groove may be provided to be spaced apart from a portion other than a portion where the stop portion contacts the stop jaw.

According to an embodiment of the disclosure, the guide rail may include a stop groove (e.g., the stop groove 622 of FIG. 10) in which a portion of the supporting member is received and which has the stop jaw with a portion corresponding to the stop portion. A size of the stop groove may be larger than a size of the stop portion.

According to an embodiment of the disclosure, an edge portion of the stop jaw may be chamfered or rounded.

According to an embodiment of the disclosure, the supporting member may include at least one groove (e.g., the first groove 6121 of FIG. 15A) formed along a circumference of an outer circumferential surface of the supporting member to receive a lubricant.

According to an embodiment of the disclosure, the guide rail may include at least one groove (e.g., the second groove 6243 of FIG. 15B) extending along a moving direction of the plurality of bars, in an inner circumferential surface of the guide rail to receive a lubricant.

According to an embodiment of the disclosure, the guide rail may include at least one groove (e.g., the third groove 6222 of FIG. 16A) extending along a moving direction of the plurality of bars, in the stop jaw to receive a lubricant.

According to an embodiment of the disclosure, the supporting member may include at least one groove (e.g., the fourth groove 6122 of FIG. 16B) formed in a surface of the stop portion that is in contact with the guide rail to receive a lubricant.

According to an embodiment of the disclosure, the guide rail may include a first rail (e.g., the first rail 621a of FIG. 25) positioned at an upper portion of an inner surface of the first rail frame or the second rail frame and having a straight path, a third rail (e.g., the third rail 621c of FIG. 25) positioned at a lower portion of the inner surface of the first rail frame or the second rail frame and having a straight path, and a second rail (e.g., the second rail 621b of FIG. 25) having one end in contact with the first rail and another end in contact with the third rail and having a curved guideline.

According to an embodiment of the disclosure, a stop portion of at least one bar positioned corresponding to where the flexible display is in a flat state among the plurality of bars may be provided not to contact the stop jaw of the rail frame.

According to an embodiment of the disclosure, the stop portion may be stuck or engaged to the stop jaw to prevent each of the plurality of bars from escaping(or detaching) from the first or second rail frame.

According to an embodiment of the disclosure, the first or second rail frame may be divided into a first portion (e.g., the first portion R1 of FIG. 28) and a second portion (e.g., the second portion R2 of FIG. 28). A distance between respective stop jaws of the first rail frame and the second rail frame in the first portion may be greater than a distance between respective stop jaws of the first rail frame and the second rail frame in the second portion.

According to an embodiment of the disclosure, the first portion may be a portion corresponding to a portion in which the flexible display is in a bent state. The second portion may be a portion corresponding to a portion in which the flexible display is in a flat state.

According to an embodiment of the disclosure, in at least one bar positioned in the second portion of the multi-bar structure, a tensile force may be applied to two opposite sides of the at least one bar in a length direction.

According to an embodiment of the disclosure, at least one bar positioned in the second portion may be prevented from being bent by stretching the body (e.g., the body 614 of FIG. 28) of the at least one bar positioned in the second portion.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments, and should be understood to include various modifications or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (200), comprising:
a flexible display (230, 630);
a multi-bar structure (240, 610) including a plurality of bars (241, 611) spaced apart from each other on a rear surface (200b) of the flexible display (230, 630) and respectively comprising a body (614); and
a first rail frame and a second rail frame coupled to two opposite sides of the multi-bar structure (240, 610),
wherein at least one bar (241, 611) of the plurality of bars (241, 611) includes a supporting member including a driving shaft (612) formed to extend from a lengthwise end portion of the body (614), and a stop portion (613) engaged with the first or second rail frames (620), the stop portion (613) comprising a stop surface (6131) positioned inward of the stop portion (613),
wherein the first and second rail frames (620) include a guide rail (621, 622) into which the supporting member is inserted to guide the multi-bar structure (240, 610) to move,
wherein
the guide rail (621, 622) includes a stop jaw (6221) configured to engage the stop portion (613) to selectively contact with the stop surface (6131).

2. The electronic device (200) of claim 1, wherein the stop portion is formed so that an outer circumferential surface thereof is inclined as a diameter of the supporting member increases toward an end.

3. The electronic device (200) of claim 1, wherein the supporting member (2012) is formed so that an outer circumferential surface thereof is inclined as a diameter of the supporting member (2012) increases toward an end portion, and
wherein the stop portion is formed to face the inclination of the outer circumferential surface.

4. The electronic device (200) of claim 1, wherein the supporting member includes a groove (6121) formed in a portion of an outer circumferential surface (627) thereof, and
wherein the stop portion (613) is positioned in a direction of an end of the supporting member with respect to the groove (6121, 6122, 6222, 6243).

5. The electronic device (200) of claim 1, wherein a cross-sectional shape of the guide rail (621) corresponds to a cross-sectional shape of the supporting member.

6. The electronic device (200) of claim 1, wherein the guide rail (621) includes a stop groove (622) in which a portion of the supporting member is received and which has the stop jaw (6221) with a portion corresponding to the stop portion (613), and
wherein the stop groove (622) is provided to be spaced apart from a portion other than a portion where the stop portion (613) contacts the stop jaw (6221).

7. The electronic device (200) of claim 1, wherein the guide rail (621) includes a stop groove (622) in which a portion of the supporting member is received and which has the stop jaw (6221) with a portion corresponding to the stop portion (613), and
wherein a size of the stop groove (622) is larger than a size of the stop portion (613).

8. The electronic device (200) of claim 1, wherein the supporting member includes at least one groove (6121) formed along a circumference of an outer circumferential surface of the supporting member to receive a lubricant.

9. The electronic device (200) of claim 1, wherein the guide rail (621) includes at least one groove (6243) extending along a moving direction of the plurality of bars (241, 611), in an inner circumferential surface of the guide rail (621) to receive a lubricant.

10. The electronic device (200) of claim 1, wherein the guide rail (621) includes at least one groove (6222) extending along a moving direction of the plurality of bars (241, 611), in the stop jaw (6221) to receive a lubricant.

11. The electronic device (200) of claim 1, wherein the supporting member includes at least one groove (6122) formed in a surface of the stop portion (613) that is in contact with the guide rail (621) to receive a lubricant.

12. The electronic device (200) of claim 1, wherein the guide rail (621) includes:
a first rail (621a) having a straight path and positioned at an upper portion of an inner surface (625) of the first rail frame or the second rail frame (610);
a third rail (621c) having a straight path and positioned at a lower portion of the inner surface (625) of the first rail frame or the second rail frame (620); and
a second rail (621b) having a curved path and having one end in contact with the first rail (621a) and another end in contact with the third rail (621c).

13. The electronic device (200) of claim 1, wherein a stop portion (613) of at least one bar (241, 611) positioned corresponding to where the flexible display (230, 630) is in a flat state among the plurality of bars (241, 611) is provided not to contact the stop jaw (6221) of the rail frame.

14. The electronic device (200) of claim 1, wherein the first rail frame and the second rail frame each are divided into a first portion corresponding to a portion in which the flexible display (230, 630) is in a bent state and a second portion corresponding to a portion in which the flexible display (230, 630) is in a flat state, and
wherein a distance between respective stop jaws (2912a) of the first rail frame and the second rail frame in the first portion (R1) is larger than a distance between respective stop jaws (2912a) of the first rail frame and the second rail frame in the second portion (R2).

15. The electronic device (200) of claim 14, wherein in at least one bar (241, 611) positioned in the second portion of the multi-bar structure (240, 610), a tensile force is applied to two opposite sides of the at least one bar (241, 611) in a length direction.

## Patentansprüche

1. Elektronische Vorrichtung (200), umfassend:
eine flexible Anzeige (230, 630);
eine Mehrstangenstruktur (240, 610) mit einer Vielzahl von Stangen (241, 611), die auf einer Rückseite (200b) der flexiblen Anzeige (230, 630) voneinander beabstandet angeordnet sind und jeweils einen Körper (614) umfassen; und
einen ersten Schienenrahmen und einen zweiten Schienenrahmen, die mit zwei gegenüberliegenden Seiten der Mehrstangenstruktur (240, 610) gekoppelt sind,
wobei mindestens eine Stange (241, 611) der mehreren Stangen (241, 611) ein Stützelement umfasst, das eine Antriebswelle (612), die so ausgebildet ist, dass sie sich von einem Längsendeabschnitt des Körpers (614) erstreckt, und einen Anschlagabschnitt (613) umfasst, der mit dem ersten oder dem zweiten Schienenrahmen (620) in Eingriff steht, wobei der Anschlagabschnitt (613) eine Anschlagfläche (6131) umfasst, die innerhalb des Anschlagabschnitts (613) positioniert ist,
wobei der erste und der zweite Schienenrahmen (620) eine Führungsschiene (621, 622) umfassen, in die das Stützelement eingeführt wird, um die Mehrstangenstruktur (240, 610) zu führen, damit sie sich bewegt,
wobei
die Führungsschiene (621, 622) eine Anschlagbacke (6221) umfasst, die so konfiguriert ist, dass sie mit dem Anschlagabschnitt (613) in Eingriff kommt, um selektiv mit der Anschlagfläche (6131) in Kontakt zu kommen.

2. Elektronische Vorrichtung (200) nach Anspruch 1, wobei der Anschlagabschnitt so ausgebildet ist, dass seine Außenumfangsfläche geneigt ist, wenn ein Durchmesser des Stützelements zu einem Ende hin zunimmt.

3. Elektronische Vorrichtung (200) nach Anspruch 1, wobei das Stützelement (2012) so ausgebildet ist, dass seine Außenumfangsfläche geneigt ist, wenn ein Durchmesser des Stützelements (2012) zu einem Endabschnitt hin zunimmt, und
wobei der Anschlagabschnitt so ausgebildet ist, dass er der Neigung der Außenumfangsfläche zugewandt ist.

4. Elektronische Vorrichtung (200) nach Anspruch 1, wobei das Stützelement eine Nut (6121) aufweist, die in einem Abschnitt einer Außenumfangsfläche (627) desselben ausgebildet ist, und
wobei der Anschlagabschnitt (613) in einer Richtung eines Endes des Stützelements in Bezug auf die Nut (6121, 6122, 6222, 6243) positioniert ist.

5. Elektronische Vorrichtung (200) nach Anspruch 1, wobei eine Querschnittsform der Führungsschiene (621) einer Querschnittsform des Stützelements entspricht.

6. Elektronische Vorrichtung (200) nach Anspruch 1, wobei die Führungsschiene (621) eine Anschlagnut (622) aufweist, in der ein Abschnitt des Stützelements aufgenommen ist und die die Anschlagbacke (6221) mit einem Abschnitt aufweist, der dem Anschlagabschnitt (613) entspricht, und
wobei die Anschlagnut (622) so vorgesehen ist, dass sie von einem anderen Abschnitt als dem Abschnitt beabstandet ist, an dem der Anschlagabschnitt (613) mit der Anschlagbacke (6221) in Kontakt steht.

7. Elektronische Vorrichtung (200) nach Anspruch 1, wobei die Führungsschiene (621) eine Anschlagnut (622) umfasst, in der ein Abschnitt des Stützelements aufgenommen ist und die die Anschlagbacke (6221) mit einem Abschnitt aufweist, der dem Anschlagabschnitt (613) entspricht, und
wobei eine Größe der Anschlagnut (622) größer ist als eine Größe des Anschlagabschnitts (613).

8. Elektronische Vorrichtung (200) nach Anspruch 1, wobei das Stützelement mindestens eine Nut (6121) umfasst, die entlang eines Umfangs einer Außenumfangsfläche des Stützelements ausgebildet ist, um ein Schmiermittel aufzunehmen.

9. Elektronische Vorrichtung (200) nach Anspruch 1, wobei die Führungsschiene (621) mindestens eine Nut (6243) in einer inneren Umfangsfläche der Führungsschiene (621) umfasst, die sich entlang einer Bewegungsrichtung der mehreren Stangen (241, 611) erstreckt, um ein Schmiermittel aufzunehmen.

10. Elektronische Vorrichtung (200) nach Anspruch 1, wobei die Führungsschiene (621) mindestens eine Nut (6222) in der Anschlagbacke (6221) umfasst, die sich entlang einer Bewegungsrichtung der mehreren Stangen (241, 611) erstreckt, um ein Schmiermittel aufzunehmen.

11. Elektronische Vorrichtung (200) nach Anspruch 1, wobei das Stützelement mindestens eine Nut (6122) umfasst, die in einer Oberfläche des Anschlagabschnitts (613) ausgebildet ist, die mit der Führungsschiene (621) in Kontakt steht, um ein Schmiermittel aufzunehmen.

12. Elektronische Vorrichtung (200) nach Anspruch 1, wobei die Führungsschiene (621) Folgendes umfasst:
eine erste Schiene (621a), die einen geraden Weg aufweist und an einem oberen Abschnitt einer Innenfläche (625) des ersten Schienenrahmens oder des zweiten Schienenrahmens (610) positioniert ist;
eine dritte Schiene (621c), die einen geraden Weg aufweist und an einem unteren Abschnitt der Innenfläche (625) des ersten Schienenrahmens oder des zweiten Schienenrahmens (620) positioniert ist; und
eine zweite Schiene (621b) mit einem gekrümmten Weg, deren eines Ende mit der ersten Schiene (621a) und deren anderes Ende mit der dritten Schiene (621c) in Kontakt steht.

13. Elektronische Vorrichtung (200) nach Anspruch 1, wobei ein Anschlagabschnitt (613) mindestens einer Stange (241, 611) unter den mehreren Stangen (241, 611), die entsprechend dort positioniert ist, wo sich die flexible Anzeige (230, 630) in einem flachen Zustand befindet, so vorgesehen ist, dass er die Anschlagbacke (6221) des Schienenrahmens nicht berührt.

14. Elektronische Vorrichtung (200) nach Anspruch 1, wobei der erste Schienenrahmen und der zweite Schienenrahmen jeweils in einen ersten Abschnitt, der einem Abschnitt entspricht, in dem sich die flexible Anzeige (230, 630) in einem gebogenen Zustand befindet, und einen zweiten Abschnitt, der einem Abschnitt entspricht, in dem sich die flexible Anzeige (230, 630) in einem flachen Zustand befindet, unterteilt sind, und
wobei ein Abstand zwischen jeweiligen Anschlagbacken (2912a) des ersten Schienenrahmens und des zweiten Schienenrahmens im ersten Abschnitt (R1) größer ist als ein Abstand zwischen jeweiligen Anschlagbacken (2912a) des ersten Schienenrahmens und des zweiten Schienenrahmens im zweiten Abschnitt (R2).

15. Elektronische Vorrichtung (200) nach Anspruch 14, wobei in mindestens einer Stange (241, 611), die in dem zweiten Abschnitt der Mehrstangenstruktur (240, 610) positioniert ist, eine Zugkraft auf zwei gegenüberliegende Seiten der mindestens einen Stange (241, 611) in einer Längenrichtung ausgeübt wird.

## Revendications

1. Dispositif électronique (200), comprenant :
un écran souple (230, 630) ;
une structure à barres multiples (240, 610) comprenant une pluralité de barres (241, 611) espacées les unes des autres sur une surface arrière (200b) de l'écran souple (230, 630) et comprenant respectivement un corps (614) ; et
un premier cadre de rail et un second cadre de rail couplés à deux côtés opposés de la structure à barres multiples (240, 610),
dans lequel au moins une barre (241, 611) de la pluralité de barres (241, 611) comporte un élément de support comportant un arbre d'entraînement (612) formé pour s'étendre à partir d'une portion d'extrémité longitudinale du corps (614), et une portion de butée (613) engagée avec le premier cadre de rail ou le second cadre de rail (620), la portion de butée (613) comprenant une surface de butée (6131) positionnée vers l'intérieur de la portion de butée (613),
dans lequel les premier et second cadres de rail (620) comprennent un rail de guidage (621, 622) dans lequel l'élément de support est inséré afin de guider la structure à barres multiples (240, 610) pour se déplacer,
dans lequel
le rail de guidage (621, 622) comporte une mâchoire de butée (6221) configurée pour engager la portion de butée (613) afin d'entrer sélectivement en contact avec la surface de butée (6131).

2. Dispositif électronique (200) selon la revendication 1, dans lequel la portion de butée est formée de sorte qu'une surface circonférentielle externe de celle-ci est inclinée lorsque un diamètre de l'élément de support augmente vers une extrémité.

3. Dispositif électronique (200) selon la revendication 1, dans lequel l'élément de support (2012) est formé de sorte qu'une surface circonférentielle externe de celui-ci est inclinée lorsque un diamètre de l'élément de support (2012) augmente vers une portion d'extrémité, et
dans lequel la portion de butée est formée pour faire face à l'inclinaison de la surface circonférentielle externe.

4. Dispositif électronique (200) selon la revendication 1, dans lequel l'élément de support comporte une rainure (6121) formée dans une portion d'une surface circonférentielle externe (627) de celui-ci, et
dans lequel la portion de butée (613) est positionnée dans une direction d'une extrémité de l'élément de support par rapport à la rainure (6121, 6122, 6222, 6243).

5. Dispositif électronique (200) selon la revendication 1, dans lequel une forme en section transversale du rail de guidage (621) correspond à une forme en section transversale de l'élément de support.

6. Dispositif électronique (200) selon la revendication 1, dans lequel le rail de guidage (621) comporte une rainure de butée (622) dans laquelle une portion de l'élément de support est reçue et qui comporte la mâchoire de butée (6221) avec une portion correspondant à la portion de butée (613), et
et dans lequel la rainure de butée (622) est prévue de manière à être espacée d'une portion autre qu'une portion où la portion de butée (613) entre en contact avec la mâchoire de butée (6221).

7. Dispositif électronique (200) selon la revendication 1, dans lequel le rail de guidage (621) comporte une rainure de butée (622) dans laquelle une portion de l'élément de support est reçue et qui comporte la mâchoire de butée (6221) avec une portion correspondant à la portion de butée (613), et
dans lequel une taille de la rainure de butée (622) est supérieure à une taille de la portion de butée (613).

8. Dispositif électronique (200) selon la revendication 1, dans lequel l'élément de support comporte au moins une rainure (6121) formée le long d'une circonférence d'une surface circonférentielle externe de l'élément de support afin de recevoir un lubrifiant.

9. Dispositif électronique (200) selon la revendication 1, dans lequel le rail de guidage (621) comporte au moins une rainure (6243) s'étendant le long d'une direction de déplacement de la pluralité de barres (241, 611), dans une surface circonférentielle interne du rail de guidage (621) afin de recevoir un lubrifiant.

10. Dispositif électronique (200) selon la revendication 1, dans lequel le rail de guidage (621) comporte au moins une rainure (6222) s'étendant le long d'une direction de déplacement de la pluralité de barres (241, 611), dans la mâchoire de butée (6221) afin de recevoir un lubrifiant.

11. Dispositif électronique (200) selon la revendication 1, dans lequel l'élément de support comporte au moins une rainure (6122) formée dans une surface de la portion de butée (613) qui est en contact avec le rail de guidage (621) afin de recevoir un lubrifiant.

12. Dispositif électronique (200) selon la revendication 1, dans lequel le rail de guidage (621) comporte :
un premier rail (621a) ayant un trajet rectiligne et positionné dans une portion supérieure d'une surface interne (625) du premier cadre de rail ou du second cadre de rail (610) ;
un troisième rail (621c) ayant un trajet rectiligne et positionné dans une portion inférieure de la surface interne (625) du premier cadre de rail ou du second cadre de rail (620) ; et
un deuxième rail (621b) ayant un trajet courbe et ayant une extrémité en contact avec le premier rail (621a) et une autre extrémité en contact avec le troisième rail (621c).

13. Dispositif électronique (200) selon la revendication 1, dans lequel une portion de butée (613) d'au moins une barre (241, 611) positionnée correspondant à un endroit où l'écran souple (230, 630) est dans un état plat parmi la pluralité de barres (241, 611) est prévue de manière à ne pas entrer en contact avec la mâchoire de butée (6221) du cadre de rail.

14. Dispositif électronique (200) selon la revendication 1, dans lequel le premier cadre de rail et le second cadre de rail sont chacun divisés en une première portion correspondant à une portion dans laquelle l'écran souple (230, 630) est dans un état courbé et une seconde portion correspondant à une portion dans laquelle l'écran souple (230, 630) est dans un état plat, et
dans lequel une distance entre des mâchoires de butée respectives (2912a) du premier cadre de rail et du second cadre de rail dans la première portion (R1) est supérieure à une distance entre des mâchoires de butée respectives (2912a) du premier cadre de rail et du second cadre de rail dans la seconde portion (R2).

15. Dispositif électronique (200) selon la revendication 14, dans lequel, dans au moins une barre (241, 611) positionnée dans la seconde portion de la structure à barres multiples (240, 610), une force de traction est appliquée à deux côtés opposés de l'au moins une barre (241, 611) dans une direction longitudinale.
